(19) **Europäisches Patentamt**
**European Patent Office**
**Office européen des brevets**

(11) **EP 4 119 284 A1**

(12) **EUROPÄISCHE PATENTANMELDUNG**

(43) Veröffentlichungstag:
18.01.2023  Patentblatt 2023/03

(21) Anmeldenummer: 21184974.0

(22) Anmeldetag: 12.07.2021

(51) Internationale Patentklassifikation (IPC):
**B23K 26/38** (2014.01)   **B23K 31/00** (2006.01)
**B23K 31/12** (2006.01)   **B23K 26/03** (2006.01)

(52) Gemeinsame Patentklassifikation (CPC):
**B23K 31/125; B23K 26/032; B23K 26/38; B23K 31/006**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Bystronic Laser AG**
**3362 Niederönz (CH)**

(72) Erfinder:
• **LÜDI, Andreas**
**3400 Burgdorf (CH)**
• **BADER, Roland**
**4933 Rütschelen (CH)**
• **JACOBI, Stefan Alfons**
**59597 Westernkotten (DE)**

(74) Vertreter: **Schwarz und Baldus Patentanwälte**
**Hermann-Schmid-Straße 10**
**80336 München (DE)**

(54) **KALIBRIERUNG EINES QUALITÄTSSCHÄTZERS FÜR EIN LASERSCHNEIDVERFAHREN**

(57)    Die Erfindung betrifft in einem Aspekt ein Kalibrierungsmodul (KM) zur Kalibrierung eines Echtzeit-Schätzers (ES), der zur Qualitätsschätzung für ein Schneidverfahren mit einer Laserschneidmaschine (L) bestimmt ist, mit:
- Einer Einleseschnittstelle (E) zum Einlesen eines Qualitätsschätzergebnisses (q') des Echtzeit-Schätzers (ES);
- Einem ersten Prozessor (P1), der zum Bereitstellen eines Qualitätsmessergebnisses (q) der Schnittkante des Werkstücks bestimmt ist, wobei das Qualitätsmessergebnis (q) insbesondere durch Erfassen (S21) von Messsignalen einer Schnittkante eines fertig geschnittenen Werkstücks mittels einer Messeinrichtung (K) bereitgestellt werden kann;
- und wobei ein zweiter Prozessor (P2) zum Vergleich des eingelesenen Qualitätsschätzergebnisses (q') mit dem Qualitätsmessergebnis (q) bestimmt ist und ereignisbasiert:
zum Berechnen eines Kalibrierungsdatensatzes (k) zur Kalibrierung des Echtzeit-Schätzers (ES) bestimmt ist
- Einer Ausgabeschnittstelle (A), die zur Ausgabe des berechneten Kalibrierungsdatensatzes (k) bestimmt ist.

Fig. 7

**EP 4 119 284 A1**

**Beschreibung**

Die Erfindung liegt auf dem Gebiet der industriellen Laserbearbeitung, insbesondere dem Schneiden von Werkstücken aus Metall oder anderen Werkstoffen, die z.B. als Metallplatten auf einem Arbeitstisch der Laserschneidmaschine zugeführt werden. Die Erfindung betrifft das Kalibrieren eines Qualitätsschätzers für die Schneidqualität eines Laserschneidverfahrens.

Wichtige Aspekte einer Laserschneidmaschine sind die Schneidqualität, die Schneidgeschwindigkeit und die Maschinenautonomie. Kann der Schneidprozess gut überwacht werden, so kann die Maschine in allen drei wesentlichen Kriterien verbessert werden. Dementsprechend wurde die Überwachung des Schneidprozesses in den letzten Jahren stets wichtiger. Heutige Maschinen sind vermehrt mit Fotodioden und teilweise gar mit Kameras ausgerüstet, welche eine Echtzeitüberwachung des Bearbeitungsprozesses ermöglichen.

Dank einer Überwachung des Schneidprozesses gelingt es heutzutage, einen Abriss, das heisst ein «Nicht-Durchschneiden» zu erkennen bzw. gar zu verhindern. Dazu sind meistens Fotodioden am Schneidkopf angebracht, welche den Prozess beobachten. Was allerdings bis heute herausfordernd bleibt, ist eine zuverlässige Schneidqualitätserkennung. Bei den im Stand der Technik bekannten Verfahren wird beispielsweise nicht erkannt, ob das geschnittene Teil z.B. zu rau, mit Grat und/oder Schlackenanhaftung geschnitten wird.

Ebenfalls etabliert hat sich das nachträgliche Ausmessen von Schnittkanten von geschnittenen Teilen, wobei es nun meistens um die Schneidqualität geht. Dabei werden oft bildgebende Geräte, wie Kameras, verwendet. Mit geeigneten Verfahren und Algorithmen können aus den erfassten Bildern der Schnittkante die Schneidqualität anhand von einer Reihe von Qualitätsparametern, wie Rauheit, Grat, Schlackenanhaftung und andere Qualitätskriterien extrahiert werden. Diese Information kann ebenfalls gebraucht werden, um die Schneidparameter für künftige Schnitte optimal einzustellen.

So schlägt die DE102019209088A1 auch vor, Handy-Fotos für die Beurteilung von Schnittkanten zu verwenden.

Die US9529343B2 adressiert ebenfalls diesen heutigen etablierten Stand der Technik. Es wird darin vorgeschlagen, sowohl Sensordaten, welche während des Schneidens auftreten, zu sammeln, wie auch Bilddaten der Schnittkante, die nach dem Schneiden aufgenommen werden, diese zusammenzufügen und damit gemeinsam die Schneidperformance abzuleiten und ggf. Verbesserungsvorschläge zu letzterem anzugeben.

Weiter ist die WO2020127004A1 der Anmelderin bekannt, welche mit einem deterministischen Schneidmodell in einem Kalibrierungsprozess vorschlägt, den Schneidprozess an sich zu optimieren. Dabei können Schnittkantenbilder von Kameras zwecks Justierung/Anpassung des Schneidmodelles verwendet werden. Weiter können die modellbasiert ermittelte Schnittkantenqualität mit der kamerabasiert ermittelten Schnittkantenqualität verglichen werden.

Ähnliches schlägt auch die WO2020069889A1 vor. Es wird ein Verfahrensparameter-Algorithmus vorgestellt, der anhand der Material- und Maschinenparameter sowie der anzustrebenden Schneidkantenqualität optimierte Verfahrensparameter für den Schneidprozess bereitstellt. Hinzu kann die erzielte Kantenqualität mit einer Kamera aufgenommen und dem Algorithmus ebenfalls zur Verfügung gestellt werden, um die Verfahrensparameter weiter zu optimieren.

Die WO2021073946A1 zeigt, dass beispielsweise, dass in einer Konfigurationsphase zuerst Überwachungsbedingungen definiert werden können, so dass sozusagen zuerst ein Bearbeitungsschritt zur Einstellung einer Überwachungsbedingung erfolgt, dann ein Bearbeitungsschritt mit eingeschalteter Überwachung und bedingt durch ein Prozesssignal wieder in einen Einstellschritt zur Bestimmung einer neuen Überwachungsbedingung eintritt.

Letztlich sei die EP3159093B1 erwähnt, welche eine Kameraanordnung am Schneidkopf erwähnt, um den Prozess koaxial entlang des Bearbeitungslasers in Echtzeit während des Schneidens beobachten zu können, um den Schneidprozess ggf. mit einer Fehlermeldung abzubrechen oder geändert (mit veränderten Schneidparametern) fortzusetzen oder eine Nachbearbeitung von Fehlstellen zu initiieren.

Die vorstehend gennannte Dokumente offenbaren Möglichkeiten, die Qualität durch Anpassung der Schneidparameter zu verbessern. Dabei können Schätzverfahren zum Einsatz kommen, um die Qualität eines Schneidprozesses im Vorfeld des Schneidprozesses abzuschätzen, um z.B. die Schneidparameter anpassen zu können, wenn das Schätzergebnis eine zu geringe Qualität ausgibt.

Die im Stand der Technik bekannten Schätzverfahren zur Abschätzung der Qualität unterliegen allerdings Störeinflüssen, die das Schätzergebnis weniger zuverlässig machen, was sich nachteilig auf den anschließenden Schneidprozess und dessen Qualität auswirkt. Insbesondere unterliegen die Schätzverfahren zeitlichen Drifts (Verschiebungen) im Langzeitverhalten mitunter aufgrund von Alterung der Sensorik und Optik, Verschleiss etc. Somit erweisen sich insbesondere solche Schätzverfahren als defizitär, deren Datengrundlage statisch ist. Ein weiterer Nachteil ist darin zu sehen, dass die Qualitätsschätzung nicht individualisiert auf die jeweilige Laserschneidmaschine, das zu schneidende Werkstück und/oder die Schneidumgebung eingestellt ist.

Ausgehend von dem vorstehend genannten Stand der Technik liegt der Erfindung die Aufgabe zugrunde, die (online) Qualitätsschätzung zu verbessern und insbesondere robuster gegenüber Störeinflüssen und sich dynamisch veränderlichen Parametern zu gestalten Insbesondere soll die Qualitätsschätzung an das aktuell geschnittene Werkstückmaterial, dessen Legierung und/oder Oberfläche und/oder dessen Dicke angepasst werden.

Die vorstehend genannte Aufgabe wird gelöst durch ein Verfahren, ein Kalibrierungsmodul, ein System und ein Computerprogramm nach den beiliegenden Patentansprüchen. Vorteilhafte Ausführungsformen, alternative Merkmale und den damit verbundenen Vorteilen finden sich in den abhängigen Ansprüchen.

Gemäß einem ersten Aspekt wird die Aufgabe durch ein Verfahren zur Kalibrierung eines Echtzeit-Schätzers gelöst, der zur Qualitätsschätzung für ein Schneidverfahren mit einer Laserschneidmaschine bestimmt ist. Das Verfahren kann die folgenden Verfahrensschritte umfassen:

- Einlesen eines Qualitätsschätzergebnisses des Echtzeit-Schätzers, der auf einer ersten Sensorik, insbesondere einem (online) Sensor basiert;
- Bereitstellen eines Qualitätsmessergebnisses der Schnittkante des Werkstücks, wobei das Qualitätsmessergebnis insbesondere durch Erfassen von Messsignalen eines fertig geschnittenen Werkstücks mittels einer zweiten Sensorik, insbesondere einer Messeinrichtung (z.B. offline Kamera) bereitgestellt werden kann;
- Vergleichen des eingelesenen Qualitätsschätzergebnisses mit dem bereitgestellten Qualitätsmessergebnis und ereignisbasiert:
- Berechnen eines Kalibrierungsdatensatzes zur Kalibrierung des Echtzeit-Schätzers.

Im Folgenden sollen die Begrifflichkeiten dieser Anmeldung definiert werden.

Das Kalibrieren meint hier ein - insbesondere periodisches oder nach einem vorkonfigurierbaren Schema wiederkehrendes - Justieren des Schätzers mit Rückführung der real gemessenen Qualitätswerte. Das Kalibrieren bezieht sich somit nicht auf den Schneidprozess, sondern lediglich auf den Echtzeit-Schätzer. Das Kalibrieren kann auch als eine Regelung verstanden werden.

Die Qualitätsschätzung erfolgt vorzugsweise in Echtzeit, also während des Schneidprozesses und somit online. Die Qualitätsschätzung wird sozusagen parallel zum Bewegen des Laserschneidkopfes über das Blech oder das zu schneidende Material ausgeführt. In einer Variante kann die Qualitätsschätzung jedoch auch bei einem Testschnitt und somit nicht an Teilen des Produktionsloses erfolgen. Ein Vorteil der hier vorgeschlagenen Qualitätsschätzung liegt jedoch darin, dass die Qualitätsschätzung ohne einen Kalibrier- oder Testschnitt und kontinuierlich im laufenden Schneidprozess bereitgestellt wird. Die Qualitätsmessung wird offline, also in der Regel nach dem Schneiden ausgeführt. "Qualitätsmessung" meint hier die Berechnung der realen und aktuellen Schnittkantenqualität auf Basis von gemessenen Signalen, insbesondere optischen Signalen (z.B. Kamerabild).

In einer bevorzugten Ausführungsform ist der Echtzeit-Schätzer zur Ausführung eines Schätzalgorithmus ausgebildet. Der Schätzalgorithmus berechnet zumindest aus erfassten Sensorsignalen zumindest eines Sensors das Qualitätsschätzergebnis. Der Schätzalgorithmus ist an sich im Stand der Technik bekannt. Hier wird z.B. auf die EP2357057A1 verwiesen, die ein Verfahren zum Überwachen der Qualität von Laserbearbeitungsprozessen beschreibt, indem Signale über optische Sensoren, wie Fotodioden, erfasst werden. Aus den Signalen werden charakteristische Kennwerte mittels Methoden der Bildverarbeitung berechnet und auf die entsprechenden Kennwerte wird ein Bezug zur Standard-Schneidqualität berechnet, um daraus die Qualität zu schätzen. Eine andere Methode ist in der Arbeit von Santolini, G. et.al.: Cut Quality Estimation in Industrial Laser Cutting Machines: A Machine Learning Approach, CVPR 2019 beschrieben. Hier werden Sensoren und ein DNN (deep neural network) eingesetzt, um auf die Schneidqualität zu schliessen.

Der Schätzalgorithmus kann auch nach den Vorgaben ausgelegt sein, wie sie in der EP 20 165 589.1 beschrieben sind, auf deren Inhalt hier verwiesen wird.

Der Schätzalgorithmus des Echtzeit-Schätzers kann mit Methoden des maschinellen Lernens ausgebildet sein. Insbesondere kann der Echtzeit-Schätzer ein Modell umfassen, vorzugsweise ein Faltungsnetz (CNN) mit mehreren hidden layers als Netzwerkschichten, insbesondere ein convolutional layer (CONV), gefolgt von einem Aktivierungslayer (ACT), gefolgt von einem Pooling layer (POOL). Diese Abfolge (CONV, ACT, POOL) kann mehrfach kaskadiert werden bevor ein oder mehrere fully connected layer (s) und ein output layer verschaltet sind.

Der Echtzeit-Schätzer kann vorzugsweise auch eine zeitliche Architektur aufweisen, um den Informationsgehalt zu verarbeiten und zu extrahieren, der in der zeitlichen Dimension der Prozesssignale steckt und somit eine Aussage über den Signalverlauf über die Zeit zu ermöglichen. Um in diesem Fall die Signalfolge im DNN abbilden und somit zeit-abhängige Merkmale lernen zu können, können in Kombination mit dem CNN insbesondere sog. Gated Recurrent Units (GRU) oder Long Short Term Memory Netze (LSTM) angewendet werden.

Grundsätzlich existiert eine Vielzahl von Netzstrukturen, wovon für die vorliegende Aufgabenstellung mit Kamerabildern vorzugsweise Convolutional Neural Networks (CNN) und Residual Neural Networks (RNN) verwendet werden. Für Bildfolgen oder zeitliche Signale müssen auch zeitliche Zusammenhänge resp. zeitliche Features erlernt werden können. Dazu eignen sich Gated Recurrent Unit (GRU) und Long Short Term Memory (LSTM) Netze. Vorteilhaft ist die Verwendung eines kombinierten Netzes, welches o.g. Netzstrukturen in unterschiedlichen Layern zusammenfasst.

Das erfindungsgemäße Verfahren und insbesondere das Kalibrierverfahren mit dem Berechnen des Kalibrierungsdatensatzes kann ein maschinelles Lernmodell verwenden. Es kann beispielsweise vorgesehen sein, dass das Kalibrierungsmodell und/oder der Echtzeit-Schätzer mittels eines Action-Reward-Learning Algorithmus, insbesondere mittels eines Reinforcement Learning Algorithmus angepasst wird. Eine alternative besonders bevorzugte Ausführungsform basiert darauf, dass das Kalibrierungsmodell und/oder der Echtzeit-Schätzer mittels eines Transfer Learning Verfahrens auf neue Materialien (z.B. neue Legierungen, oder andere Materialdicken) angepasst wird, um den Transfer des auf Material vom Typ A trainierten Echtzeit-Schätzers und/oder Modells auf ein Material vom Typ B zu ermöglichen. Je nachdem, ab welchem Layer des DNNs bei dem Echtzeit-Schätzer das Netz neu trainiert wird, können unterschiedlich abstrakte Features wiederverwendet werden. Das Transfer Learning Verfahren kann in einer Weiterbildung auch angewendet werden, um das berechnete bzw. angelernte Wissen auf andere Prozessarten, insbesondere Schneidprozessarten, wie Laserschmelzschneiden, Laserbrennschneiden, Laserinduziertes Plasmaschneiden, Plasmaunterstütztes Schmelzschneiden, Plasmaunterstütztes Brennschneiden, zu übertragen.

Als vorteilhafte Ergänzung kann das Modell mittels Kennwerten gestützt werden, welche mittels Methoden des unüberwachten Lernens (unsupervised learning) direkt aus den Sensordaten gewonnen werden. Für die Berechnung dieser unterstützenden Kennwerte sind keine Qualitätsmessungen erforderlich. Dadurch können auch bei wenigen vorliegenden Qualitätsmessungen die wesentlichen Prozessvariationen in den Sensorsignalen bzw. -daten erkannt werden. Es können Methoden, wie z.B. Clustering, Autoencoder, Dimensionsreduktionstechniken, wie k-NN/ k-nearest Neighbour, PCA/ principal Component Analysis, etc. zur Anwendung kommen.

Die Sensordaten sind vorzugsweise optische Sensordaten, die während des Schneidens (online) durch eine geeignete erste Sensorik, im Folgenden "Sensor" genannt (z.B. Fotodioden, Kamera, OCT, akustische Sensoren) erfasst werden, also während der Online-Prozessbeobachtung. Diese Sensordaten werden als Inputdaten dem Schätzalgorithmus übergeben. Der Begriff "Sensor" ist hier als Sensoreinheit zu verstehen und kann mehrere separate Sensoren desselben oder eines anderen Typs umfassen. Die so erfassten Sensordaten (digital) oder Sensorsignale (analog) können mittels einer Sensorfusionstechnik kombiniert werden. Die optionalen Inputdaten (sofern vorhanden) sind Materialart, -dicke, Schneidverfahren, Laserleistung, Schneidgasdruck, Gasart, Düsentyp/-grösse, Vorschub, Düsenabstand, Fokuslage.

In einer bevorzugten Ausführungsform der Erfindung werden den erfassten Sensordaten und/oder Messsignalen Positionsidentifikationsdaten (Positionsidentifikator) zugeordnet, um den Datensatz eindeutig adressieren und identifizieren und eine Ortsauflösung bereitstellen zu können. Dies ist wichtig, um später das Vergleichen auf denjenigen Datensätzen auszuführen, die an derselben Position des Teils und insbesondere der Schnittkante erfasst worden sind. Dies ist also wichtig, um die Messung und Schätzung an derselben Position zu matchen (pairen oder zuordnen) zu können für den Schritt des Vergleiches.

Die erste Sensorik ist in einer bevorzugten Ausführungsform der Erfindung als optischer Sensor implementiert, insbesondere als koaxial im Schneidkopf angeordnete Kamera. Alternativ oder kumulativ kann die erste Sensorik oder der Sensor auch ein akustischer Sensor oder ein Sensor zur Erfassung von anderen Signaltypen sein, wie beispielsweise eine thermische Sensorik mit einer Pyro-Kamera. Die erste Sensorik bzw. der Sensor liefert Sensorsignale.

Die zweite Sensorik ist in einer bevorzugten Ausführungsform der Erfindung als Messeinrichtung, insbesondere als optische Messeinrichtung (z.B. als Kamera) implementiert und kann zur Erfassung von offline Messsignalen an der Schnittkante des Werkstücks dienen. "Offline" meint hier, die sensorische Erfassung nach dem Schneiden des Werkstücks oder nach einem Teilschneidvorgang, der zum Zweck der Messung unterbrochen wird und die optische Erfassung der geschnittenen Schnittkante ermöglicht. Die zweite Sensorik bzw. die Messeinrichtung kann in einem Folgesystem zur Laserschneidmaschine angeordnet sein, wie z.B. einem Sortiersystem, einem Transportsystem und/oder einem Biegesystem. Die Messeinrichtung kann aber auch in der Laserschneidmaschine selbst untergebracht sein, um z.B. und vorzugsweise intermittierend zum Schneiden von Produktionsteilen eine Schnittkante zu messen. Die Messeinrichtung kann auch zur direkten Messung von Qualitätssignalen ausgebildet sein, wie später noch erläutert werden wird (z.B. Profilometer). Die Messeinrichtung kann eine Einrichtung mit mehreren Modulen sein und kann mehrere separate Sensoren, Detektoren, Messmodule desselben oder eines anderen Typs umfassen. Die zweite Sensorik bzw. die Messeinrichtung liefert Messsignale.

Die Outputdaten des Schätzalgorithmus umfassen Angaben zur aktuell im Schneidprozess erzielten Schneidqualität. Die Schneidqualität umfasst folgende Merkmale (nicht abschließend), wobei einige Merkmale auch als Qualitätsdefekte bezeichnet werden: Rauheit, Kolkungen, Gratbildung, Schlackenrückstand, Verschweißung. Die Merkmale werden bevorzugt in Qualitätsklassen ausgegeben. Dabei können z.B. 3 bis 6 Qualitätsklassen ausgegeben werden, namentlich "sehr gut", "gut", "mittel", "mässig", "schlecht". Die Art und Anzahl der Klassen kann in einer Konfigurationsphase konfiguriert werden. Damit können die Outputdaten kategorial sein. Es ist jedoch alternativ oder kumulativ möglich, sowohl die Grathöhe, wie auch die Rauheit mit einer kontinuierlichen Schätzzahl zwischen 0 und 1 anzugeben mit numerischen Werten, um ein detaillierteres Schätzergebnis bereitzustellen. Bevorzugt ist jedoch aktuell ein Qualitätsklassen-Output.

Alternativ oder kumulativ ist es möglich, dass der Schätzalgorithmus des Qualitätsschätzers die direkten quantitativen Merkmale liefert, also z.B. die Grathöhe in einer Masseinheit, wie $\mu$m und/oder die Rauheit in einer Masseinheit. Dies vereinfacht den späteren digitalen Vergleich mit der Qualitätsmessung.

Alternativ oder kumulativ ist es möglich, dass nach der Qualitätsmessung zur Bereitstellung des Qualitätsmessergebnisses der Schnittkante des Werkstücks das jeweilige Qualitätsmessergebnis einem zusätzlichen Verfahrensschritt unterzogen wird, nämlich einem Binning Verfahren, das die Qualitätsmessergebnisse entsprechend der qualitativen Merkmale des Schätzers in entsprechende Klassen klassifiziert. Damit kann der Vergleich zwischen Messung und Schätzung für kategorielle Werte vereinfacht werden.

Bevorzugt werden die Schritte des Verfahrens Einlesen, Bereitstellen und Vergleichen in der genannten Reihenfolge ausgeführt. Besonders bevorzugt ist es, dass das Einlesen und die Sensorsignalerfassung mit dem Sensor online, also während eines produktiven Schneidvorganges bzw. an Teilen des Produktionsloses erfolgt, während das Bereitstellen und das Erfassen der Messsignale, insbesondere des Schnittkantenbildes des fertig geschnittenen Teils mittels der Messeinrichtung in einer späteren Zeitphase und insbesondere nach Abschluss des Schneidvorganges erfolgen kann. Alternativ kann das Erfassen der Messsignale auch in den Schneidprozess integriert sein, wie oben beschrieben (Unterbrechung des Schneidprozesses bei teilfreigelegter Schnittkante).

Der Schätzalgorithmus basiert auf Eingangsdaten, die vom Sensor gespeist werden, vorzugsweise kontinuierlich. Das Bereitstellen des Qualitätsmessergebnisses basiert auf anderen Eingangsdaten, die von der Messeinrichtung gespeist werden.

Die Aktivierung der Messeinrichtung kann automatisch durch ein Aktivierungssignal des Kalibrierungsmoduls ausgelöst werden oder durch einen manuellen Eingriff.

Das Vergleichen der Schätzung mit der Messung (beides in Bezug zur Qualität) und/oder das Berechnen des Kalibrierungsdatensatzes erfolgt vorzugsweise ereignisbasiert. In einer ersten Variante wird der Vergleich und/oder das Berechnen (des Kalibrierungsdatensatzes) kontinuierlich ausgeführt. In einer zweiten Variante, wird der Vergleich/Berechnen nicht immer ausgeführt, sondern nur bei Bedarf, insbesondere bei Eintreten von vorkonfigurierten Ereignissen. Die Ereignisse können zeitbasiert oder situationsbasiert sein. Insbesondere kann ein Schwellwert konfiguriert werden. Sobald der Vergleich eine Abweichung über dem konfigurierten Schwellwert aufzeigt, wird instantan das Berechnen des Kalibrierungsdatensatzes ausgelöst und vorzugsweise wird auch die Kalibrierung des Echtzeit-Schätzers angestoßen. Es kann aber auch konfiguriert werden, dass das Berechnen für einen bestimmte Zeitphase ausgesetzt wird, nämlich vorzugsweise dann, wenn die Abweichungen unterhalb des Schwellwertes liegen und somit indizieren, dass Schätzung und Messung bis auf einen ebenfalls vorkonfigurierbaren Toleranzbereich konform sind und keine Anpassung des Schätzers erforderlich ist.

Das Berechnen des Kalibrierungsdatensatzes kann durch unterschiedliche Ereignisse initialisiert bzw. getriggert werden, wie z.B. durch Bereitstellung von neuen Messwerten, durch den Abschluss eines Schneidvorgangs, nach zeitlichen Ereignissen oder nach vordefinierten Ereignissen (wenn z.B. ein bestimmter Bereich eines Werkstückblechs geschnitten ist oder wenn die Abweichung einen Schwellwert übersteigt oder bei anderen konfigurierbaren Ereignissen). Dies kann in einem Trigger Bauteil implementiert sein. Dies spart Rechenkapazität, da der Vergleich nur ausgeführt wird, wenn er erforderlich ist. Das Berechnen des Kalibrierungsdatensatzes kann in einer Ausführungsform der Erfindung nur dann ausgeführt werden, wenn der Echtzeit-Schätzer eine Kalibrierung anfordert.

Das Kalibrieren des Echtzeit-Schätzers kann ebenfalls ereignisbasiert und/oder bei Anfall von geänderten Kalibrierungsdaten ausgelöst werden.

Das Erfassen von Messsignalen einer Schnittkante eines fertig geschnittenen Werkstücks kann konfigurierbar sein. So kann das Erfassen des Bildes nach einem Zeit- oder Ereignismuster initiiert werden, wie z.B. nach bestimmten Zeitintervallen. Alternativ oder kumulativ kann z.B. das Auslesen der Sensoren (Fotodiode oder Kamera) konfiguriert werden und gemäß einem bestimmten Zeitschema erfolgen.

Der berechnete Kalibrierungsdatensatz wird vorzugsweise unmittelbar an den Echtzeit-Schätzer weitergegeben und/oder einem separaten, dem Echtzeitschätzer nachgeschalteten Echzeit-Modul, um diesen und/oder das Qualitätsschätzergebnis neu zu kalibrieren. In einer vorteilhaften Ausführung der Erfindung umfasst der Kalibrierungsdatensatz einen Offset, mit dem das Qualitätsschätzergebnis des Echtzeit-Schätzers beaufschlagt wird. Im einfachsten Fall umfasst der Kalibrierungsdatensatz neue Einstellwerte zur Anpassung des Echtzeit-Schätzers. Somit wird es möglich, den Echtzeit-Schätzer dynamisch und auch während eines Schneidvorgangs einer kontinuierlichen Nachregelung zu unterziehen.

In einer weiteren bevorzugten Ausführungsform der Erfindung umfasst der Kalibrierungsdatensatz die trainierten Parameter des Kalibrierungsmodells, das mit jeweils einander zugeordneten Qualitätsschätzergebnissen und Qualitätsmessergebnissen trainiert worden ist.

Das Qualitätsmessergebnis wird vorzugsweise durch Erfassen eines Bildes der Schnittkante eines Teils nach dem Schneiden mittels der Messeinrichtung beurteilt. Die Beurteilung kann automatisch mittels Methoden der Bildverarbeitung ausgeführt werden. Alternativ oder kumulativ können Methoden des maschinellen Lernens auf die erfassten Schnittkantenbilder angewendet werden. Alternativ oder kumulativ kann die Beurteilung der erfassten Bilder hinsichtlich konfigurierbaren Qualitätskriterien auch manuell erfolgen, indem die Schnittkante von einem Anwender begutachtet wird. Der Bediener kann dann über eine Benutzerschnittstelle sein Beurteilungsergebnis einer digitalen Verarbeitungseinheit bereitstellen. Dazu können ihm bestimmte Schaltflächen angeboten werden. In diesem Fall kann das Qualitätsmessergebnis durch einen Eingabedatensatz über eine Benutzerschnittstelle bereitgestellt werden. Dies kann insbesondere dann ausgeführt werden, falls die Bilderfassung und die automatische, algorithmische Bildbeurteilung aufgrund eines Fehlers fehlschlugen.

Alternativ oder kumulativ kann das Qualitätsmessergebnis auch ohne Bildgebung mittels einer Messung auf automatisierte Art und Weise erfolgen, indem die Schnittkante vermessen wird, um die optisch erfassbaren Qualitätsparameter, wie z.B. Riefentiefe, Riefenhäufigkeit, Rauhigkeit und/oder die Grathöhe direkt zu messen. Dazu können optische und/oder mechanische Messgeräte zur Rauheitsmessung (Profilometer) und/oder zur Vermessung des Grates (Gradmesser) eingesetzt werden. Insbesondere kann ein optisches 3D-Messsystem verwendet werden, welches insbesondere nach dem Prinzip der Fokus-Variation arbeitet. Die Fokus-Variation ist ein flächenbasiertes Verfahren zur optischen, hochauflösenden 3D Oberflächenmessung im Mikro- und Nanobereich. Die Technologie kombiniert die Funktionalitäten eines Rauheitsmessgeräts und eines Koordinatenmesssystems. Die Rauheit wird nach der Norm DIN EN ISO 4287 gemessen. Dabei werden verschiedene Rauheits-Kennwerte unterschieden. Für Laserschnittflächen geeignet sind: Ra Profilmittenrauheit, Rz gemittelte Profilrautiefe, Sa gemittelte Flächenrauheit.

In einer Variante ist das Verfahren bzw. das Kalibriermodul zur Erfassung von Verfärbungen (z.B. Oxydschicht) der Schnittkante ausgebildet, die auch mittels optischer Bilderfassung detektiert wird.

Bei der Laserschneidmaschine handelt es sich vorzugsweise um eine Anlage, die im Bereich der industriellen Fertigung eingesetzt wird. Die Laserschneidmaschine kann z.B. ein Faserlaser oder ein $CO_2$-Laser beinhalten mit entsprechenden Wellenlängen. Faserlaser werden üblicherweise mit Wellenlänge im nahen Infrarotbereich, typischerweise 1070nm betrieben. Deren Leistungen betragen heutzutage mind. 2kW. Industriell eingesetzte Höchstleistungen liegen derzeit bei 30kW, Tendenz steigend. Das Strahlparameterprodukt (beam parameter product - BPP) liegt typischerweise bei 3-4mmmrad, bei Höchstleistungen eher höher. CO2-Laser können mit einer Welllänge von 10.6 µm bei einer Leistung von 2 - 10kW und einem Strahlparameterprodukt um die 10 mm mrad betrieben werden.

In einer bevorzugten Ausführungsform erfolgt die Aktivierung des Sensors und die Aktivierung der Messeinrichtung nicht synchron und insbesondere nach einem unterschiedlichen Schema. Insbesondere ist der Sensor fortlaufend aktiviert und die Messeinrichtung kann nur sporadisch und bei Bedarf zugeschaltet und/oder aktiviert werden. Zudem sind die beiden Bilderfassungseinrichtungen (Sensor, Messreinrichtung) vorzugsweise separate Einrichtungen. Die genannten Bilderfassungseinrichtungen können an unterschiedlichen Positionen und/oder an unterschiedlichen Geräten bzw. Bauteilen angeordnet. Der Sensor ist typischerweise in der Lasermaschine und vorzugsweise im Laserschneidkopf angeordnet und die Messeinrichtung ist separat und vorzugsweise in einem mobilen Endgerät und/oder an einem Handlingsystem, wie einem Sortiersystem, angeordnet. Beide Bilderfassungseinrichtungen sind mit geeigneten Datenschnittstellen zum Kalibrierungsmodul und zum Echtzeit-Schätzer ausgebildet.

In einer bevorzugten Ausführungsform kann der Sensor als optischer Sensor und insbesondere als eine in-process Kamera und/oder als Fotodiodeneinheit und/oder als akustischer Sensor ausgebildet sein. Der Sensor ist die Grundlage und stellt die Eingangssignale für den Echtzeit-Schätzer (im Folgenden auch kurz als ‚Schätzer' bezeichnet) bereit, z.B. in Form von Fotodiodensignalen.

Die Messeinrichtung kann einen oder mehrere Sensoren umfassen, vorzugsweise optische Sensoren. Die Messeinrichtung kann z.B. zumindest eine Kamera sein, insbesondere eine Kamera, die in einem mobilen Endgerät und/oder an einem Automatisierungssystem (Sortiersystem) befestigt oder diesem zugeordnet ist. Die Messeinrichtung ist ein Gerät, das zur Qualitätsmessung verwendet wird und dazu dient, das Qualitätsmessergebnis bereitzustellen.

Wie oben erläutert, sind der Sensor und die Messeinrichtung bevorzugt zwei separate und unterschiedliche Einheiten. Insbesondere kann es sich bei der Messeinrichtung um eine optische Erfassungseinrichtung in einem mobilen Gerät handeln, wie z.B. ein Smartphone mit einer Kamera, das/die der Anwender bei sich trägt. Auf dem Smartphone oder dem vergleichbaren mobilen Endgerät (z.B. Tablet) kann eine App installiert sein, die auf Basis des erfassten Bildes automatisch eine Qualitätsbeurteilung durchführt.

In einer alternativen Ausführungsform können die Messsignale der Messeinrichtung auch intermittierend zum Schneidvorgang erfasst werden. Dazu kann nach einem Schneidvorgang oder Teilschneidvorgang, der eine Schnittkante zumindest teilweise freilegt, ein (vorzugsweise automatischer) Düsenwechsel ausgeführt werden, der einen an der Düse angeordneten Umlenkspiegel umfasst, um mit Blickrichtung von oben die freigelegte Schnittkante von der Seite zu erfassen. Die Erfassung der Messsignale erfolgt somit in diesem Fall mit einer Messeinrichtung, die an der Laserschneidmaschine, insbesondere am Schneidkopf ausgebildet ist. Im letzteren Fall kann die Einrichtung, die während des Schneidens die Prozesszone beobachtet und Sensorsignale erfasst (Sensor) dieselbe sein, die später die Schnittkante des geschnittenen Werkstücks erfasst (Messeinrichtung). Vorzugsweise ist der Sensor zur Bildsignalerfassung bestimmt. Die Bildsignalerfassung kann dazu entweder an einem Produktivschnitt oder an einem Kalibrierschnitt erfolgen.

In einer weiteren bevorzugten Ausführungsform ist das Erfassen von Messsignalen, nämlich Qualitätsmesssignalen der Schnittkante, konfigurierbar hinsichtlich einer Ausführungszeit und/oder Ausführungsart. So kann insbesondere der Zeitpunkt, die Häufigkeit bzw. die Anzahl der Aufnahmen des mobilen Endgerätes (z.B. Handykamera) in Abhängigkeit von dem jeweiligen Anwendungsfall konfiguriert sein. Wenn beispielsweise ein fehleranfälliges Bauteil geschnitten werden muss, dann kann es erforderlich sein, häufiger zu messen und Aufnahmen zu machen und umgekehrt. Darüber hinaus können auch ggf. Erfassungsparameter, wie z.B. Belichtungszeit, Fokus etc. variiert werden. Das Erfassen des von Signalen, z.B. von mindestens einem Bild, und/oder das Bereitstellen des Qualitätsmessergebnisses kann sporadisch in konfigurierbaren Intervallen oder gemäß einem konfigurierbaren Muster oder ereignisbasiert (z.B. vom Zustand des Sortier- oder Maschinen-Handling-Systems) gesteuert werden.

In einer anderen bevorzugten Ausführungsform erfolgt das Berechnen eines Kalibrierungsdatensatzes nur bei Erkennen von Abweichungen, die einen vorkonfigurierbaren Schwellenwert überschreiten. Dies hat den Vorteil, dass nicht unnötig Kalibrierungsdaten übertragen und Kalibrierungsprozeduren auf dem Schätzer ausgeführt werden müssen.

In einer anderen vorteilhaften Ausführungsform werden den erfassten Sensorsignalen und/oder Messsignalen Metadaten zugeordnet und/oder auf zugeordnete Art gespeichert. Metadaten können z.B. den Erfassungszeitpunkt, eine Teilenummer, aber auch ein Werkstück-Material (Legierung, Dicke, etc.) betreffen. Aus den Metadaten zu den erfassten Sensorsignalen können wertvolle Informationen abgeleitet werden. So können beispielsweise Muster erkannt und mit dem Schneidplan abgeglichen werden. So kann z.B. bei der Schätzung automatisch berücksichtigt werden, dass die Qualität sich - ohne Änderung der Schneidparameter - über die Trajektorie verändert und z.B. bei engen Radien geringer sein würde als bei Geradeaus-Schnitten. Dies kann z.B. eine häufigere Aktivierung des Sensors in diesen Bereichen bewirken. Alternativ oder kumulativ können Metadaten auch zu den erfassten Messsignalen der Messeinrichtung bei der Berechnung des Kalibrierungsdatensatzes berücksichtigt werden (z.B. Angaben zur Identifikation des Teils, des Werkstückes und/oder Zeitangaben etc.).

Grundsätzlich können Metadaten auch aus anderen Quellen (z.B. aus dem Schneidplan) eingelesen und dem Kalibrierungsmodul als Inputdaten zur Verfügung gestellt und bei der Berechnung des Kalibrierungsdatensatzes mit einbezogen werden. Im einfachsten Fall kann eine Tabelle mit allen für unterschiedliche Materiallegierungen berechneten Kalibrierungsdatensätzen angelegt werden. Wird später wieder dieselbe Materiallegierung geschnitten, kann der entsprechende Kalibrierungsdatensatz vor Schneidbeginn geladen werden, wodurch der Echtzeit-Schätzer schon von Schneidbeginn an bestmöglich kalibriert ist.

In einer Weiterentwicklung und vorteilhaften Ausführungsform wird der Kalibrierungsdatensatz materialspezifisch und/oder schneidprozessspezifisch berechnet. Materialspezifisch kann Angaben zur Art des Materials (z.B. Legierung, wie St37 resp. S235 als preisgünstiges Stahlblech oder z.B. Ruukkilaser als hochwertiges Laserblech), einer Materialdicke und/oder einer Oberflächen-Charakterisierung (z.B. blank resp. gebeizt, oder sandgestrahlt oder verzundert) umfassen. Schneidprozessspezifisch kann Angaben zum Schneidprozess umfassen, wie z.B. Schmelzschneiden, Brennschneiden, Laserinduziertes Plasmaschneiden, Plasmaunterstütztes Schmelzschneiden oder Brennschneiden etc. Schneidprozessspezifisch bedeutet jedoch auch, dass wesentliche Prozessparameter der Schneidmaschine zur Berechnung des Kalibrierungsdatensatzes mit einbezogen werden. Der Einbezug von Prozessparametern ist besonders vorteilhaft, wenn ein Kalibrierungsmodell verwendet wird und kann insbesondere direkt als zusätzlicher Input sowohl beim Training des Kalibrierungsmodells verwendet werden, wie auch für dessen Echtzeit-Anwendung nachgeschaltet zum Echtzeit-Qualitätsschätzer. Wesentliche Prozessparameter sind: Laserleistung, Vorschub, Fokuslage, Schneidgasdruck und Düsenabstand.

In einer anderen vorteilhaften Ausführungsform wird zur Berechnung des Kalibrierungsdatensatzes ein Kalibrierungsmodell angewendet, das im einfachsten Fall vorzugsweise mit jeweils einander zugeordneten Qualitätsschätzergebnissen und Qualitätsmessergebnissen trainiert worden ist, um zu einem aktuellen Qualitätsschätzergebnis ein kalibriertes Qualitätsschätzergebnis zu berechnen.

Vorzugsweise wird als Modell (hier für ,Kalibrierungsmodell') ein in der künstlichen Intelligenz bzw. im Machine-Learning gängiges Modell verwendet, welches mit Methoden des überwachten Lernens (supervised learning) trainiert worden ist. Das Kalibrierungsmodell kann trainiert werden, indem zusätzlich gespeicherte Zwischenergebnisse des Echtzeit-Schätzers als Trainingsdaten verwendet werden und insbesondere Zwischenergebnisse des Echtzeit-Schätzers in Form von Aktivierungswerten von Neuronen eines convolutional neural networks (CNN), die vor einer Ausgabeschicht angeordnet sind.

Das Modell kann vorzugsweise ein künstliches neuronales Netz (ANN), ein MLP (Multi Layer Perceptron, ein Regressionsmodell, Regressions- oder Klassifikationsbaum, eine support vector machine (SVM), Random Forest, Gradient boosted Tree umfassen oder aus den genannten Modellen kombiniert sein (etwas unter Anwendung eines Ensemble Learning Verfahrens). Die Eingangsdaten und Trainingsdaten sind keine Bilddaten, sondern zwei unabhängige Variablen: Schätzwert und Messwert. Die Ausgangsdaten umfassen einen kalibrierten Schätzwert und/oder einen Kalibrierungsdatensatz. Grundsätzlich gibt es unterschiedliche Implementierungsmöglichkeiten. Ein MLP (fully connected) ist äquivalent anwendbar zu einem Regressionsmodell, wobei Letzteres Vorteile bei der Implementierung hat, da es einfacher ist. Zu beachten ist, dass auch eine Variante des Kalibrierungsmodells eingesetzt werden kann. Bei der Variante werden zusätzlich Zwischenergebnisse des Echtzeit-Schätzers (Aktivierungswerte nach CNN-Layern) verwendet. Hier wäre ein MLP und/oder ein flexibles Modell (SVM, random forest o.ä.) zu verwenden.

Das Modell kann ein Regressionsmodell umfassen, vorteilhaft ein lineares Regressionsmodell 2. Ordnung. Dieses ist bei wenigen Input-Grössen (bis ca. 10) sehr einfach einsetzbar und kann auch Nichtlinearitäten und Wechselwirkungen zwischen zwei Parametern abbilden. Das Training erfordert nur geringe Rechenleistung, weil dabei die Methode der kleinsten Quadrate (englisch: OLS, ordinary least squares) angewendet wird, welche ohne Iterationen auskommt.

Bevorzugt sind flexible Kalibrierungsmodelle, wie z.B. die Support Vector Machine, SVM. Alternativ könnte aber auch z.B. ein Random Forest (multipler Entscheidungsbaum) oder ein mittels XGboost (gradient boosted tree) gefittetes Modell zur Anwendung kommen.

Vorzugsweise kann ein Ensemble Learning Ansatz implementiert werden. Bei einem Ensemble werden mehrere Modelle trainiert und zur Laufzeit gleichzeitig ausgewertet, um z.B. über die Mittelung der Ausgabewerte (bei Regression) oder über Mehrheitswahl (majorityvoting) (bei Klassifikation) eine erhöhte Genauigkeit oder eine verbesserte Vorhersage zu erzielen.

Das Modell kann auch als statistisches Modell ausgebildet sein oder ein solches umfassen.

Vorzugsweise wird das Kalibrierungsmodell trainiert, um aus den original vom Echtzeit-Schätzer bereitgestellten Qualitätsschätzwerten, kalibrierte Qualitätsschätzwerte zu berechnen. Das Kalibrierungsmodell kann trainiert sein, indem gespeicherte Zwischenergebnisse des Echtzeit-Schätzers zusammen mit zugeordneten Qualitätsmessergebnisdaten als Trainings- resp. Inputdaten verwendet werden. Zwischenergebnisse des Echtzeit-Schätzers umfassen insbesondere die mittels gelernten d.h. parametrierten Filtern (kernels) extrahierten Features eines CNN, d.h. die Aktivierungswerte von Neuronen von oder nach convolutional neural network layern (CONV Layer), welche vor den Layern des Klassifikators (fully connected output layer) angeordnet sind. Die Filterkernel sind die parametrierten Kernel des CNN und sind normalerweise unveränderlich zur Laufzeit bzw. im Onlinebetrieb, d.h. während die erste Sensorik im Schneidbetrieb kontinuierlich Echtzeit-Daten liefert und daraus der Echtzeit-Schätzer die Qualität schätzt, während die Aktivierungswerte (der entsprechenden CONV Layer) die im Onlinebetrieb mit den Filterkerneln (der entsprechenden CONV Layer) berechneten Werte aus den aktuellen Echtzeit-Bilddaten darstellen. Die Filterkernel können aber durch ein Nachtraining des Echtzeit-Schätzers angepasst werden, z.B. mittels Transfer-Learning oder mittels Action-Reward-Learning, insbesondere mittels Reinforcement Learning. Die komplexeren Methoden des Transfer-Learnings erlauben bei neuen Materialien, Blechdicken und/oder neuen Schneidprozessen sogar während laufender Produktion das Erlernen von ggf. neuen Korrelationen in den Signalen der Prozesssensorik versus der produktionsrelevanten Qualitätsmerkmale, was somit eine wachsende Kognition und Performanz der Online-Qualitätsschätzung bedeutet.

Die Eingangsdaten des Echtzeitschätzers sind die Sensorsignale, insbesondere der Prozesssensorik, also hauptsächlich die Signale der In-Prozess-Kamera und/oder der Fotodioden. Alternativ oder kumulativ können weitere Sensoren zum Einsatz kommen, wie eine Lichtfeldkamera und/oder akustische Sensoren. Die Ausgangsdaten des Echtzeitschätzers ist das berechnete Qualitätsschätzergebnis.

Grundsätzlich ist ein Vorteil des hier vorgestellten Verfahrens darin zu sehen, dass es ohne die Ausführung von Kalibrierschnitten anwendbar ist. Diese können fakultativ vorgenommen werden, müssen aber nicht. Optional können der Echtzeit-Schätzer und die Schritte des Verfahrens, insbesondere das Einlesen, das Bereitstellen und das Vergleichen, nach der Ausführung eines Kalibrierschnittes ausgeführt werden. Beispielsweise kann das Erfassen von Signalen einer Schnittkante an einem Kalibrierschnitt oder ohne Kalibrierschnitt und direkt im Rahmen des Ausführens eines Schneidplans ausgeführt werden.

Das Erfassen von Messsignalen und vorzugsweise optischen Messsignalen eines Bildgebers kann über einen Umlenkspiegel und/oder insbesondere auch intermittierend zum Schneidprozess (online) erfolgen. Das Erfassen der Messsignale kann weiterhin bevorzugt intermittierend erfolgen. Dies hat den Vorteil, dass eine Messung der Kante außerhalb der Schneidmaschine nicht notwendig ist, da die Messung der Kante bereits intermittierend zum Schneidvorgang ausgeführt werden konnte. Dazu kann ein Kalibrierschnitt z.B. am Rand der Blechtafel ausgeführt werden oder mittels Umlenkspiegel kann in Ausschnitten, deren Innenteile durch den Schneidrost heruntergefallen sind, ein Bild der Schnittkanten direkt mit dem Sensor (erste Sensorik) gemacht werden.

Vorstehend wurde die Lösung der Aufgabe anhand des Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf ein System oder auf ein Kalibrierungsmodul oder ein Computerprogramm gerichtet sind) mit den Merkmalen weitergebildet sein, die in Zusammenhang mit dem Verfahren beschrieben oder beansprucht sind. Die entsprechenden funktionalen Merkmale des Verfahrens (z.B. Einlesen) werden dabei durch entsprechende gegenständliche Module, insbesondere durch Hardware-Module oder Mikroprozessor-Module, des Systems bzw. des Produktes (z.B. Einleseschnittstelle) ausgebildet und umgekehrt.

Gemäß einem weiteren Aspekt betrifft die Erfindung ein Kalibrierungsmodul zur Kalibrierung eines Echtzeit-Schätzers, der zur Qualitätsschätzung für ein Schneidverfahren mit einer Laserschneidmaschine bestimmt ist, mit:

- Einer Einleseschnittstelle zum Einlesen eines Qualitätsschätzergebnisses des Echtzeit-Schätzers;
- Einem ersten Prozessor, der zum Bereitstellen eines Qualitätsmessergebnisses der Schnittkante des Werkstücks bestimmt ist, wobei das Qualitätsmessergebnis insbesondere durch Erfassen von Messsignalen einer Schnittkante eines fertig geschnittenen Werkstücks mittels einer Messeinrichtung bereitgestellt werden kann;
- und wobei ein zweiter Prozessor zum Vergleich des eingelesenen Qualitätsschätzergebnisses mit dem Qualitätsmessergebnis bestimmt ist und ereignisbasiert, insbesondere bei Erkennen einer Abweichung: zum Berechnen eines Kalibrierungsdatensatzes zur Kalibrierung des Echtzeit-Schätzers bestimmt ist;
- Einer Ausgabeschnittstelle, die zur Ausgabe des berechneten Kalibrierungsdatensatzes bestimmt ist.

In einem weiteren Aspekt betrifft die Erfindung ein System mit einem Echtzeit-Schätzer und einem Kalibrierungsmodul, wie vorstehend beschrieben, zur Anwendung für eine Laserschneidmaschine. Der Echtzeit-Schätzer und das Kalibrierungsmodul können dabei als verteiltes System ausgebildet sein und müssen nicht in dergleichen baulichen Einheit implementiert sein. Dadurch entsteht wesentlich mehr Flexibilität und rechenintensive Prozesse wie die Berechnung des Kalibrierungsdatensatzes und/oder die Kalibrierung des Echtzeit-Schätzers können auf leistungsstarke Server ausgelagert werden. Insbesondere können der zweite Prozessor zum Vergleich und zur Berechnung des Kalibrierungsdatensatzes sowie auch der erste Prozessor, der das Qualitätsmessergebnis liefert einerseits lokal auf einem Computer der Maschine laufen oder sie können auch als Netzwerk-Dienst laufen oder insbesondere auch als cloudbasierte Dienste. Damit müssen rechenintensive Schritte, wie ein Training eines großen Kalibrierungsmodells oder ein vollständiges Retraining des Online-Qualitätsschätzers nicht lokal auf der Maschine stattfinden. Ein weiterer Vorteil einer cloudbasierten Lösung ist, dass Trainingsdaten zentral gesammelt und produzierende Anlagen durch eine größere Vielfalt von geschnittenen Materialien potentiell voneinander profitieren können.

In einer bevorzugten Ausführungsform umfasst das System einen Sensor oder steht mit diesem in Datenaustausch. Der Sensor kann vorzugsweise als In-Process Sensor, z.B. Kamera, ausgebildet sein.

Der Kalibrierungsdatensatz dient zur Kalibrierung bzw. Nachjustierung des Echtzeit-Schätzers. Eine einfache Nachjustierung ist schlicht das Hinzufügen eines entsprechenden Offsets zur Echtzeit-Qualitätsschätzung. Dabei wird für jeden Qualitätskennwert, wie Rauheit oder Grat, die Differenz von gemessenem oder real festgestelltem Wert zu geschätztem Wert gebildet. Wurden mehrere Schnittkanten fotografiert, werden alle Differenzwerte des gleichen Kennwerts gemittelt. Beim nächsten Schneidauftrag werden die gemittelten Differenzen als Offset auf die Kennwerte der Echtzeit-Qualitätsschätzung addiert. Dadurch wird die vorherige Abweichung kompensiert, und die Schneidqualität kann genauer in Echtzeit geschätzt werden. Der Vorteil dieser einfachen Methode besteht darin, dass zu jeder zu fotografierenden Schnittkante nur die Kennwerte der Echtzeit-Schätzung gespeichert werden müssen und keine aufwendigen Berechnungen zur Korrektur der Echtzeit-Schätzung durchgeführt werden müssen.

Eine weitere Methode zur Nachjustierung sieht vor, dass für jede fotografierte Schnittkante alle festgestellten resp. gemessenen Qualitätskennwerte bzw. Qualitätsmessergebnisse als Label (Y-Werte) und alle Schätzwerte bzw. Qualitätsschätzergebnisse der zuvor gespeicherten Echtzeit-Qualitätsschätzung als erklärende Werte (X-Werte) insgesamt als Eingangswerte für das Training eines Kalibrierungsmodells verwendet werden. Für die Nachjustierung wird also ein Kalibrierungsmodell mit den oben genannten Daten trainiert. Als Ergebnis des Trainings liegt eine Parametrierung des Kalibrierungsmodells vor, welche für das geschnittene Blech bestmöglich angepasst ist.

Beim nächsten Schneidauftrag werden die Echtzeit-Qualitätsschätzungen der Sensorik in Echtzeit durch das nunmehr trainierte Kalibrierungsmodell korrigiert. Der Vorteil dieser Weiterentwicklung ist, dass nichtlineare Zusammenhänge zwischen den ursprünglichen Echtzeit-Schätzwerten im Kalibrierungsmodell abgebildet werden und somit die Nachjustierung genauer wird.

Eine weitere Methode zur Nachjustierung besteht darin, dass zusätzlich die gespeicherten Zwischenergebnisse der Echtzeit-Qualitätsschätzung als Eingangsgrössen für ein Training des Kalibrierungsmodells verwendet werden. Unter Zwischenergebnissen der Echtzeit-Qualitätsschätzung verstehen sich bei Verwendung eines Deep-Neural-Networks (DNN) als Echtzeit-Schätzer für die Schneidqualität die Aktivierungswerte der Neuronen nach den Layern z.B. eines Convolutional-Neural-Networks (CNN), welche vor dem Output Layer/Klassifikator vorliegen. Diese Zwischenergebnisse enthalten gegenüber den originalen Sensordaten sehr stark komprimierte Information zu den Qualitätskennwerten. Als möglicher Klassifikator sei ein klassisches Neuronales Netzwerk erwähnt, welches aus voll verbundenen (Fully-Connected) Layern besteht. Der Vorteil dieser Methode ist, dass die Eingangsdaten für das Training des Kalibrierungsmodells höherdimensional anfallen, und die Nachjustierung genauer erfolgen kann. Zudem ermöglicht der Zugriff auf die Zwischenergebnisse der Echtzeit-Qualitätsschätzung, dass eine bessere Generalisierung der Nachjustierung auch für leicht veränderte Materialzusammensetzung und Blechdicke erreicht wird.

Eine weitere Methode zur Nachjustierung besteht darin, dass der Echtzeit-Qualitätsschätzer direkt nachtrainiert wird, ohne separate Verwendung eines Kalibrierungsmodells. Dazu werden die festgestellten Qualitätskennwerte der in-situ Messung, d.h. das Qualitätsmessergebnis, als Label und die dazugehörigen gespeicherten originalen Sensordaten insgesamt als Eingangsdaten für das Nachtraining verwendet. Dadurch kann auch bei Verwendung eines DNN als Echtzeit-Qualitätsschätzer mit relativ wenig neuen Daten eine gute Kalibrierung erreicht werden.

Ein weiterer Vorteil der beiden letzten Methoden ist, dass sich damit ein Transfer Learning implementieren lässt. In der künstlichen Intelligenz bezeichnet Transfer Learning die Aufgabe, das aus einer bestimmten Domäne erlernte Wissen auf eine andere Domäne zu übertragen. Das erlernte Wissen, welches im Echtzeit-Qualitätsschätzer initial vorhanden ist und ggf. durch vorangegangene Nachtrainings bereits spezialisiert wurde, kann demnach bei Vorhandensein von genügend neuen Daten mit derselben Methode auf neue Materialien und Blechdicken sowie Schneidprozessarten (Laserschmelzschneiden, Laserbrennschneiden, Laserinduziertes Plasmaschneiden, Plasmaunterstütztes Schmelzschneiden, Plasmaunterstütztes Brennschneiden) übertragen werden.

Besonders vorteilhaft ist weiterführend, wenn bei neuen Materialien die in-situ Qualitätsmessung (mittels Messeinrichtung) ihrerseits durch den Operateur situativ nachjustiert werden kann, sodass diese die vom Operateur gewünschten Qualitätsmerkmale in der gewünschten Ausprägung feststellen kann.

Eine Weiterentwicklung der vorstehenden Methoden zur Nachjustierung besteht darin, dass die Korrekturwerte oder die Parametrierung des Kalibrierungsmodells oder der nachtrainierte Echtzeit-Qualitätsschätzer für jedes geschnittene Material und Blechdicke und ggf. andere unterscheidende Merkmale (wie Materialzusammensetzung resp. -Legierung, Oberfläche, Schneidprozess-Einstellungen) gespeichert werden. Beim nächsten Schneidauftrag werden gemäss aktuell geladenem Material, Blechdicke usw. die passenden Korrekturwerte oder die passende Parametrierung des Kalibrierungsmodells oder der passende nachtrainierte Echtzeit-Qualitätsschätzer wieder geladen. Dadurch kann die Echtzeit-Qualitätsschätzung sehr genau materialspezifisch ausgeführt werden und allfällige Qualitätseinbussen werden von Beginn des neuen Schneidauftrags an zuverlässig erkannt.

Eine Weiterentwicklung der vorstehenden Methoden zur Nachjustierung der Echtzeit-Schneidqualitätsschätzung besteht darin, den Prozess der Nachjustierung als kontinuierlichen Aktions-Belohnungs-Prozess (Action-Reward) zu implementieren. D.h. statt eines kompletten Nachtrainings des gesamten Echtzeit-Qualitätsschätzers oder des Kalibrierungsmodells wird bei jeder in-situ Messung der Schneidqualität eine Modellanpassung des Echtzeit-Qualitätsschätzers durchgeführt, mittels Verstärkendem Lernen (Reinforcement Learning). In dieser Weiterentwicklung würde dies vorteilhafterweise direkt die Parameter des DNN des Echtzeitschätzers betreffen. Der Reinforcement Learning Algorithmus kann dann die vielen Parametern des DNN so einstellen, dass dieses besser schätzt. Dadurch entfällt das immer wiederkehrende Nachtrainieren, was bei kurzen Intervallen von in-situ Messungen vorteilhaft ist und ohne dabei auf die komplexeren Methoden verzichten zu müssen.

Mit den erläuterten Methoden ist es somit möglich, die Schneidqualität online resp. in Echtzeit mit verlässlicher Genauigkeit zu schätzen, selbst unter ungünstigen Produktionsbedingungen mit variablen Einflussfaktoren. Die komplexeren Methoden des Transfer-Learnings erlauben bei neuen Materialien, Blechdicken und Schneidprozessen sogar während laufender Produktion das Erlernen von ggf. neuen Korrelationen in den Signalen der Prozesssensorik versus der produktionsrelevanten Qualitätsmerkmale, und somit eine wachsende Kognition und Performanz der Echtzeit-Qualitätsschätzung.

Falls die Messeinrichtung nicht implementiert ist oder an einer ungünstigen Position angeordnet ist, so kann der Operateur das geschnittene Teil auch manuell vor die Kamera oder sogar vor den Sensor halten.

Ist die festgestellte Schneidqualität nicht zufriedenstellend, können die Schneidparameter (Laserleistung, Laserstrahlfokuslage, Schneidgasdruck, etc.) dahingehend verändert werden, dass die Schneidqualität besser wird. Ist eine Echtzeit-Qualitätsschätzung implementiert, so kann die Schneidqualitätsveränderung beim Ändern der Schneidparameter unmittelbar festgestellt werden. Ist keine Echtzeit-Qualitätsschätzung implementiert, so kann die Schneidqualitätsveränderung aufgrund der Schneidparameterveränderung erst beim nächsten Schneidplan überprüft werden. Für die genannte Regelung der Schneidparameter mittels festgestellter Schneidqualität (im «closed loop») ist kein menschlicher Eingriff nötig.

Grundsätzlich soll unter dem Begriff «offline» bzw. Offline-Qualitätsermittlung die Qualitätsmessung oder -ermittlung verstanden werden, die nicht während des Schneidens ausgeführt wird, sondern die auf einem fertig geschnittenen Teil ausgeführt wird im Unterschied zur online-Qualitätsschätzung, die während dem Schneidprozess erfolgt.

In einer Variante kann die Offline Qualitätsermittlung statt beim Handlingsystem auf dem Schneidtisch auch wie folgt ausgeführt werden. Es wird ein Kalibrierschnitt (Rechteckloch) ausgeführt und mit einer Spezialdüse mit 45° Spiegelchen (ähnlich einem Zahnarzt-Spiegel), welche mit Düsenwechsler eingesetzt wird, wird mittels der Schneidkopf-Kamera, d.h. in-process Kamera die Schnittqualität ermittelt. Mit dem Spiegel könnte auch der Grat im Bereich der Unterkante vermessen werden. Der Vorteil dieser Variante ist, dass dies zu Beginn und/oder während dem Schneidprozess erfolgen kann und somit die Teilequalität unmittelbar optimiert werden kann. Unter Umständen muss das Rechteckloch mithilfe einer Vorrichtung aus dem Blech entfernt werden oder es wird mittels Abfallzerkleinerung sichergestellt, dass der Ausschnitt auch tatsächlich zum Einführen des Spiegels frei ist.

Eine weitere Variante, die Offline-Qualitätsermittlung (Messeinrichtung) statt beim Abräumroboter oder beim Sortiersystem direkt auf dem Schneidtisch der Laserschneidmaschine durchführen zu können, kann wie folgt ablaufen: Kalibrierschnitt am Blechrand ausführen. Der ausgeschnittene Bereich fällt herunter. Die freiwerdende Schnittkante wird mit der Messeinrichtung, z.B. mit in der Maschine eingebauter Kamera seitlich fotografiert. Dadurch kann direkt vor dem Schneiden, oder auch ein paarmal während dem Schneiden, die Schneidqualität aus den Bildern ermittelt werden.

Die ermittelte Offline-Schneidqualität kann dann zum Update des Echtzeit-Schätzers der Schneidqualität verwendet werden, oder direkt zur Adaption von Schneidparametern, also zur Optimierung der Schneidqualität.

Der Vorteil dieser Variante ist, dass die Bildqualität immer gleich ist und, dass keine Spezialdüse und Düsenwechsler benötigt werden. Weiter kann die Kalibrierung zu Beginn und/oder während des Schneidprozesses erfolgen und somit die Teilequalität unmittelbar optimiert werden.

Sollte sich zeigen, dass gewisse Werkstoffeigenschaften (chemische Zusammensetzung, Walzrichtung, kalt-/warmgewalzt, Oberflächenstruktur und Beschaffenheit, etc.) zu charakteristischen Echtzeitschätzungen wie auch Offline Qualitätsmessungen führen, könnte diese Korrelation dazu genutzt werden, die oben genannten Werkstoffeigenschaften abzuschätzen. Diese könnten dann auch an ein Folgesystem weitergeben werden, so z.B. an eine Biegemaschine. Mit dieser Information kann die Biegemaschine z.B. das Rückfedern des Werkstoffes berechnen und somit gleich das erste Teil richtig biegen (durch korrekte Wahl des nötigen Überbiegens).

Eine weitere Aufgabenlösung sieht ein Computerprogramm vor, mit Computerprogrammcode zur Durchführung aller Verfahrensschritte des oben näher beschriebenen Verfahrens, wenn das Computerprogramm auf einem Computer ausgeführt wird oder in einen Prozessor des Computers geladen wird. Dabei ist es auch möglich, dass das Computerprogramm auf einem von einem Computer lesbaren Medium gespeichert ist. Das Computerprogramm implementiert in einer bevorzugten Ausführungsform der Erfindung das Verfahren, wie vorstehend beschrieben und kann optional die genannten Weiterbildungen implementieren.

In der folgenden detaillierten Figurenbeschreibung werden nicht einschränkend zu verstehende Ausführungsbeispiele mit deren Merkmalen und weiteren Vorteilen anhand der Zeichnung besprochen.

**Kurze Beschreibung der Figuren**

Es zeigen:

Fig. 1 eine beispielhafte Skizze eines Schneidsystems mit zugeordneten Handlingsystemen;

Fig. 2 eine weitere Darstellung eines Schneidsystems mit integriertem Kamerasystem, das als Messeinrichtung dient;

Fig. 3 ein Foto von zwei Schnittproben mit unterschiedlicher Qualität der Schnittkante;

Fig. 4 weitere Darstellungen von Schnittproben in unterschiedlicher Qualität;

Fig. 5 eine schematische Darstellung eines Laserbearbeitungskopfes mit einer Prozessbeobachtungseinheit;

Fig. 6 eine schematische Übersichtsdarstellung über die Architektur von Komponenten gemäß einer bevorzugten Ausführungsform eines Kalibrierungssystems der Erfindung;

Fig. 7 eine schematische Darstellung eines einfachen Kalibrierverfahrens;

Fig 8 ein Ablaufdiagramm gemäß einer bevorzugten Ausführungsform der Erfindung;

Fig. 9 eine Übersichtsdarstellung des Systems gemäß einer weiteren bevorzugten Ausführungsform der Erfindung;

Fig.10. eine schematische Darstellung zur Interaktion des Kalibriermodells mit dem Echtzeit-Schätzer

**Detaillierte Beschreibung der Erfindung**

Die Erfindung betrifft ein Kalibrierungstool bzw. -modul und -Verfahren zum Kalibrieren eines Echtzeit-Schätzers ES zur Qualitätsschätzung eines Schneidergebnisses einer Laserschneidmaschine L.

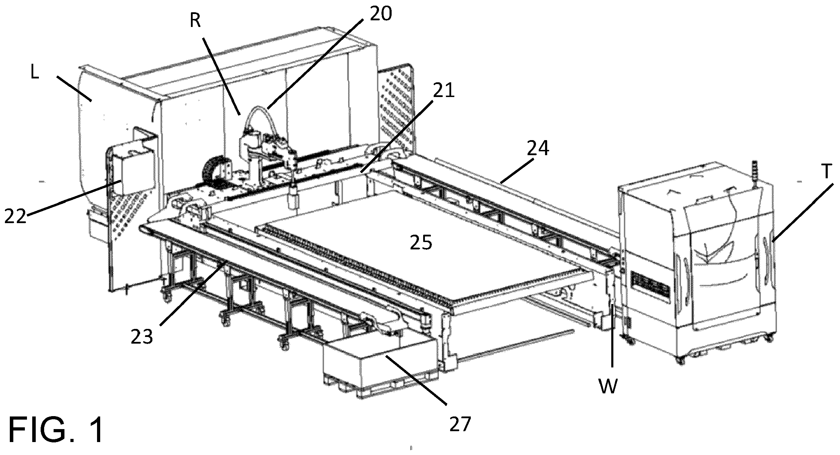

Fig. 1 zeigt schematisch ein Laserschneidsystem mit einem Wechseltisch W, der zur Zufuhr und Abfuhr der Werkstücke in und aus der Laserschneidmaschine L bestimmt ist. Das System umfasst weiterhin einen Abräumroboter R und Teilesortierung T. Bei der Teilesortierung T ist bereits eine Kamera vorhanden, mit welcher nebst der Teileerkennung auch die Schneidqualität abgeschätzt werden kann. Das System kann zwei Förderbänder 23, 24 umfassen. Der Wechseltisch W dient zur Aufnahme des Werkstücks. Das System kann eine Entladepalette 27 umfassen. Mit 21 ist eine Sortierbrücke mit wenigstens einem Förderband bezeichnet. Mit dem Bezugszeichen 22 ist ein Bedienpanel bezeichnet, das ein User Interface umfasst. Der Entladeroboter 20 dient zum Entladen der Teile vom Wechseltisch W nachdem sie geschnitten sind.

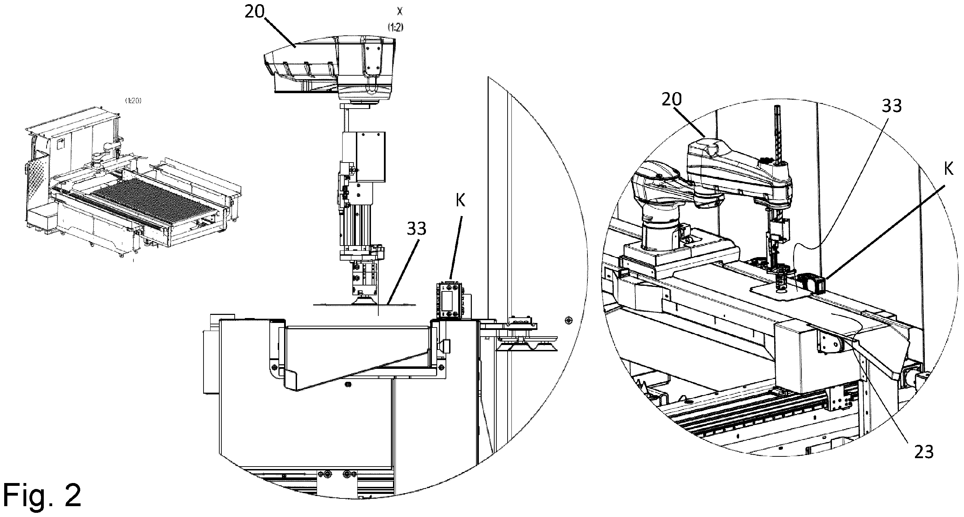

**Fig. 2** zeigt ein ähnliches System mit Abräumroboter R inkl. Kamerasystem K, welches auch zur Erfassung von Schnittflächenbildern verwendet wird. Der Entladeroboter 20 kann einen Greifarm, insbesondere einen Sauger, umfassen, um ein geschnittenes Teil 33, das zu vermessen und zu sortieren ist, anzuheben. Das System kann eine Teilerutsche 31 umfassen, die an der Sortierbrücke angeordnet sein kann.

Im Folgenden wird ein typischer Ablauf beschreiben.

Ein Schneidplan für eine Blechtafel wird geladen. Dabei wird von der Maschinensteuerung der erste gerade Schnitt identifiziert, welcher für die in-situ Kameraaufnahme der Schnittkante (Messsignale einer Messeinrichtung) geeignet ist. Geeignet ist ein gerader Schnitt von einigen cm Länge, so dass die Qualitätskenngrössen ausreichend gemittelt werden können. Auch soll der Schneidprozess stationär sein, d.h. es soll keine Beschleunigung des Schneidkopfes auf der ausgewählten Strecke vorkommen. Wird dieser gerade Schnitt durchgeführt, werden dabei die Signale der Prozessbeobachtung, welche auch Kameraaufnahmen der Bearbeitungszone mittels eines Sensors D umfassen, sowie die daraus geschätzte Schneidqualität q' (insb. Grathöhe und Rauheit) gespeichert. Mitgespeichert werden auch die Metainformationen zu den Sensorsignalen, d.h. Koordinaten und Zeit des ausgewählten Schnittes und die fortlaufende Teilenummer, sowie weiter unten ausgeführte Zwischenergebnisse der Echtzeit-Schneidqualitätsschätzung.

Wird ein Schneidplan geladen, so kann festgestellt werden, welche Teile bzw. welche Schnittkanten sich für die Offline-Messung eignen. Die Schnittkante sollte idealerweise folgende Kriterien erfüllen, nach welchen die Auswahlparameter zu setzen sind.

- Schnittkante eines nicht zu schweren, gut handelbaren Teils
- Gerade Schnittkante von mind. 1cm Länge, damit die Qualitätskenngrößen ausreichend gemittelt werden können.
- Schnittkante, bei welcher ein stationärer Schnitt vorherrschte, namentlich keine Schneidkopfbeschleunigung vorkam.

Aus all den Schnittkantenabschnitten pro Schneidplan, die obige Kriterien erfüllen, kann parametrierbar wie folgt ausgewählt werden:

- Auswahl so, dass durch die Offline-Messung (Messung 2 mittels Messeinrichtung) keine Zeitverzögerung / Produktivitäts-Einbußen resultiert.
- Auswahl so, dass durch die Offline-Messung maximal xy % an Produktivitäts-Einbuße resultiert, wobei der Wert xy gesetzt werden kann.

Je nach gewähltem xy-%-Wert werden die gewählten Schnittkantenabschnitte gleichmäßig über dem Schneidplan verteilt.

In einer bevorzugten Ausführungsform der Erfindung kann ein schlechtes Messergebnis des Sensors (online) auch mit einem Messergebnis der Messeinrichtung bzw. der Kamera (offline) ausgeglichen werden. Wenn die Qualitätsschätzung von Messung 1 (mittels Sensor D) schlechte Qualität anzeigt, wird diese Messung 1 gespeichert und das Teil/der Schnitt später mittels Sensorik 2 (Messeinrichtung K) gemessen. Dadurch erhält man auch Daten von schlechten Schnitten, resp. gem. Messung 1 schlechten Schnitten und das Kalibrierungsmodell kann über einen größeren Qualitätsbereich trainiert werden, was die Genauigkeit der Kalibrierung erhöht. Dadurch kann der Anteil an Pseudofehlern (false positives: Messung 1 zeigt schlecht, Messung 2 zeigt gut) verringert werden.

Sind alle Teile auf der ganzen Blechtafel geschnitten, wird mittels automatischem Wechseltisch die geschnittene Blechtafel zur Maschine hinaus zum Sortiertisch gefahren. Beim Sortiertisch ist ein Roboterarm und eine Kamera K vorhanden. Der Roboterarm übernimmt das Sortieren des geschnittenen Bleches, indem die verschiedenen Teile in entsprechende Behälter (oder Paletten) gestapelt werden. Wird das Teil, bei welchem die geeignete Schneidkante zwecks in-situ-Messung identifiziert wurde und dessen Koordinaten bekannt sind, vom Roboterarm genommen, wird nun vor dem Abstapeln die ausgewählte Schnittkante der Kamera K zugeführt. In geeigneter Art, z.B. auch aus verschiedenen Richtungen, wird nun die Schnittkante fotografiert. Aus den Fotografien kann die Schneidqualität in bekannter Art festgestellt bzw. gemessen werden.

Nun kann die Echtzeit-Qualitätsschätzung basierend auf erfassten Sensorsignalen und die (in-situ) Qualitätsmessung basierend auf Messsignalen verglichen werden. Weichen die beiden Qualitätsgrößen nur innerhalb akzeptabler Toleranzen voneinander ab, typischerweise <10% (die Schwelle ist parametrierbar), so braucht die Echtzeit-Schätzung nicht nachjustiert zu werden. Ist die Abweichung grösser, sollte damit die Echtzeit-Schätzung in geeigneter Weise kalibriert werden.

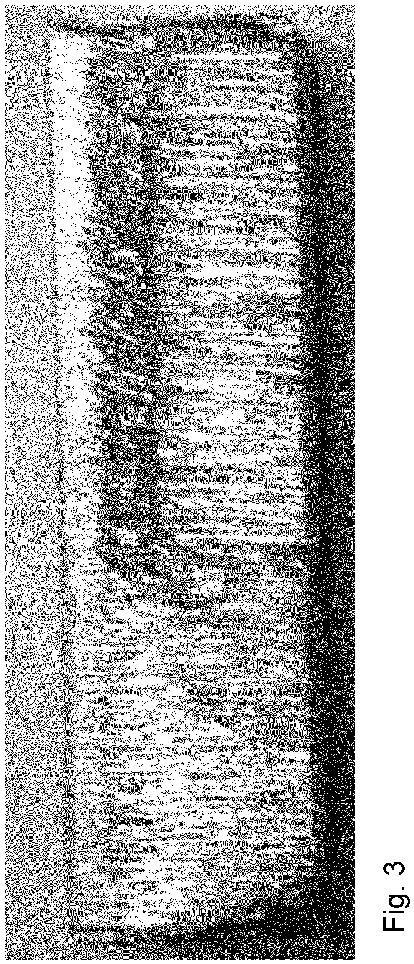

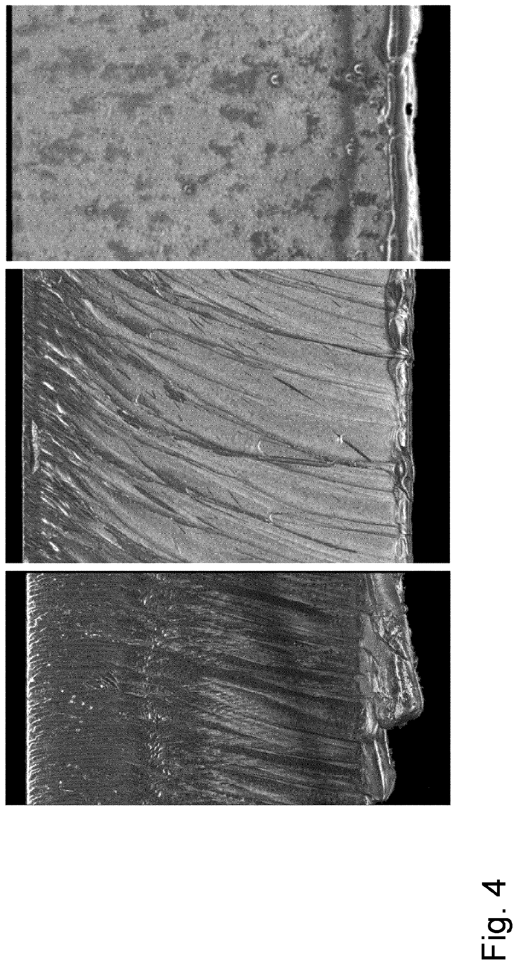

**Figuren 3 und 4** zeigen Schneidkanten mit unterschiedlicher Schneidqualität. Die jeweiligen Qualitäten können gut unterschieden werden. So ist in Fig. 3 die Rauheit links offensichtlich geringer als rechts. Fig. 4 zeigt Fotos mehrerer Schneidproben mit unterschiedlicher Schneidqualität. Insbesondere ist links die starke Gratbildung augenfällig, während im mittleren Bild nur ein leichter Grat vorhanden ist. Die rechte Abbildung zeigt eine Schnittkante von unten, wobei auch hier die Gratbildung deutlich zu sehen ist. Für die Offline-Qualitätsmessung können sowohl Bilder von der Seite (links und Mitte) wie auch von der Unterseite (rechts) verwendet werden. Andere Perspektiven sind auch möglich. Proben mit bekannter Qualität (z.B. ganz linke und/oder ganz rechte) könnten auch zur Kalibrierung einer Offline-Qualitätsmessung basierend auf Kamerabildern genutzt werden.

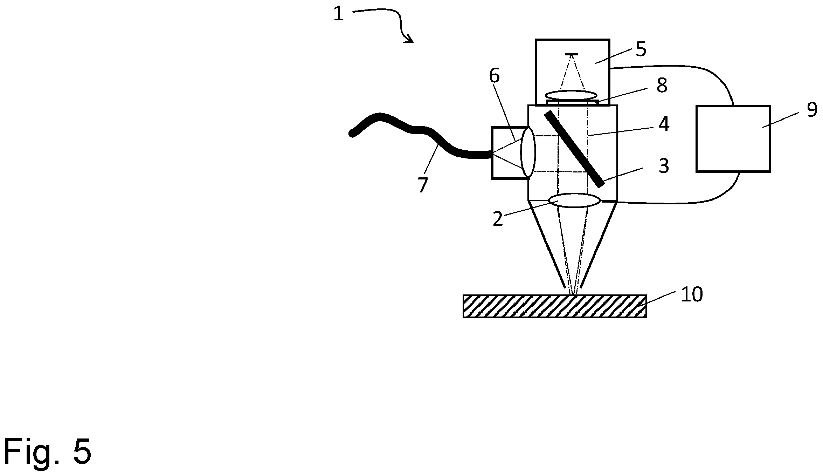

**Fig. 5** zeigt einen exemplarischen Schneidkopf 1 mit beispielhafter Sensorik 5 in Form einer koaxialen Kamera zur Durchführung einer ersten Messung bzw. zur Erfassung von Sensorsignalen, welche zum Qualitätsschätzergebnis des Echtzeit-Schätzers ES führt. Der beispielhafte Schneidkopf zeigt zudem die Fokussierlinse 2 für den Arbeitslaserstrahl 6, der via Transportfaser 7 zum Schneidkopf geführt wird, der dichroitische Umlenkspiegel 3 zwecks Auskopplung des Prozessbeobachtungsstrahlenganges 4 zur Prozessbeobachtung via Prozessbeobachtungseinheit/Kamera 5, Blenden und/oder Filter zur Prozessbeobachtungsoptimierung sowie einer Einheit 9 mit welcher Schneidparameter adaptiert werden können, beispielhaft gezeigt anhand einer automatischen Fokussierlinsenverstellung. Mit 10 ist das Werkstück gekennzeichnet.

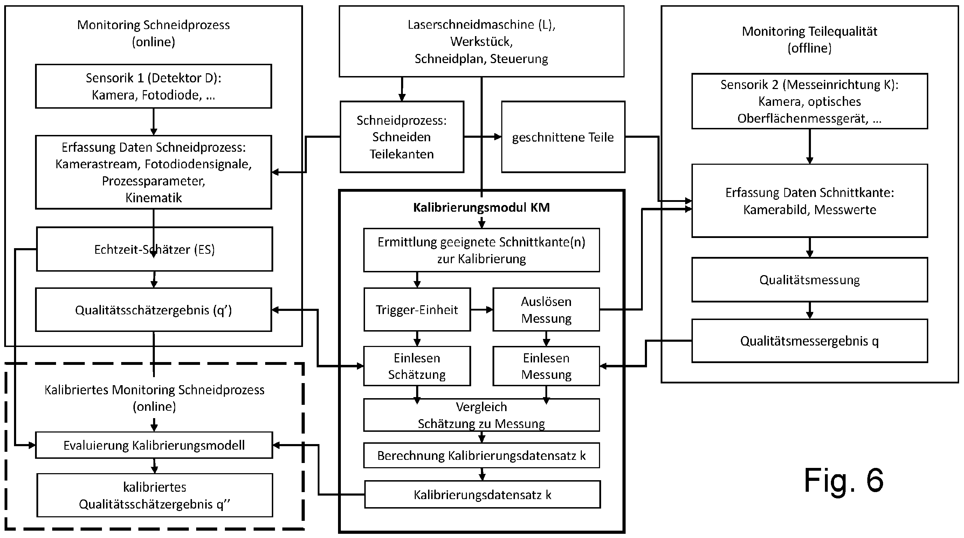

**Fig. 6** zeigt das Kalibrierungssystem gemäß einer bevorzugten Ausführungsform. Ein Kalibriermodul KM steht im Mittelpunkt der Erfindung und dient zur Kalibrierung des Echtzeit-Schätzers ES.

Wie in Fig. 6 gezeigt, gibt es zwei Monitoring Prozesse:

> 1. einen online Prozess, während dem Schneiden, in dem die erste Sensorik mit dem Sensor bzw. Detektor D aktiv ist (linke Seite in Fig. 6) und
> 2. einen offline Prozess, nach dem Schneiden, in dem die zweite Sensorik mit der Messeinrichtung, insbesondere der Kamera K aktiv ist (rechte Seite in Fig. 6).

Die Sensorsignale des Sensors (online) werden dem Echtzeit-Schätzer ES zugeführt, damit dieser das Qualitätsschätzergebnis ausgeben kann. Die Messsignale der Messeinrichtung, insbesondere der Kamera K, werden zur Berechnung des Qualitätsmessergebnisses q erfasst und algorithmisch verrechnet.

Das Kalibrierungsmodell wird insbesondere online im Berechnungstakt des Echtzeit-Schätzers ES mit Qualitätsschätzergebnissen q' und dem Kalibrierdatensatz k als Input (und evtl. Zwischenergebnissen) ausgewertet bzw. angewendet oder evaluiert. Im Kalibrierungsmodul wird es trainiert; dies ist in Fig.6 mit dem Kasten "Berechnung Kalibrierungsdatensatz" gekennzeichnet.

Wie in Fig. 6 angedeutet, muss nicht notwendigerweise eine optische Sensorik (z.B. Kamera) für den Sensor (online, erste Sensorik) und/oder für die Messeinrichtung (offline, zweite Sensorik) eingesetzt werden. Alternativ oder kumulativ können andere Sensortypen angewendet werden, akustische Sensoren, ein Profilometer etc. Ein weiterer Vorteil ist darin zu sehen, dass die erste und zweite Sensorik nicht zwangsweise identisch sein müssen. So ist es möglich, dass der erste Sensor ein Modul aus unterschiedlichen optischen Detektoren (Kamera, Fotodioden) ist, optimiert für den Einsatz als schnelle Online-Sensorik. Der zweite Sensor mit der Messeinrichtung ist dagegen optimiert zur Erfassung der Offline-Schneidqualität, z.B. mittels einer hochauflösende Kamera. Der Vorteil einer Kamera als zweite Sensorik ist, dass sie eine schnelle Erfassung der Schnittflächen erlaubt, was z.B. beim Entladen mit Roboter eine Bedingung ist. Trotzdem sind als zweite Sensorik auch ein optisches Messgerät zur Erfassung der Oberflächentopografie, oder ein mechanisches Messgerät zur Rauheitsmessung (Profilometer) oder ein anderes mechanisches Messsystem einsetzbar. Beide erfassten Signaltypen werden dann algorithmisch in ein Ergebnis umgerechnet, nämlich in das Qualitätsschätz- und das Qualitätsmessergebnis, das dann wieder verglichen werden kann.

Wie in Fig. 6 gezeigt, kann der berechnete Kalibrierungsdatensatz k auch zur Evaluierung des Kalibrierungsmodells verwendet werden. Dies dient dazu, ein kalibriertes Qualitätsschätzergebnis q" bereitzustellen.

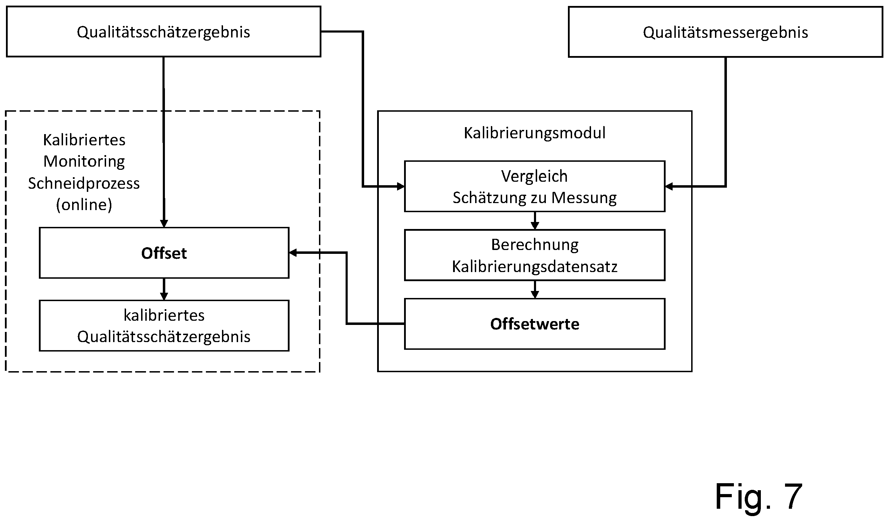

**Fig. 7** zeigt das Zusammenspiel zwischen dem Qualitätsschätzergebnis und dem Qualitätsmessergebnis nochmals auf schematische Weise. Das Kalibrierungsmodul KM berechnet aus dem eingelesenen Qualitätsschätz- und Qualitätsmessergebnis einen Kalibrierungsdatensatz k. Im einfachsten Fall kann es sich dabei um einen Offset handeln, mit dem die Schätzung als Kalibrierung beaufschlagt wird. Für den nächsten Schnitt, kann bereits ein kalibrierter Schätzer angewendet werden, um genauere Schätzungen bereitstellen zu können.

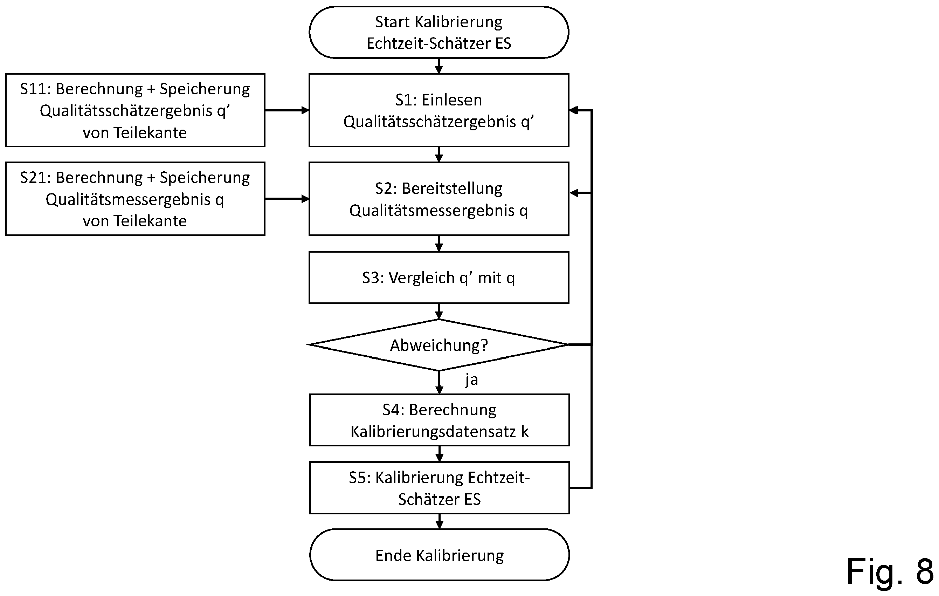

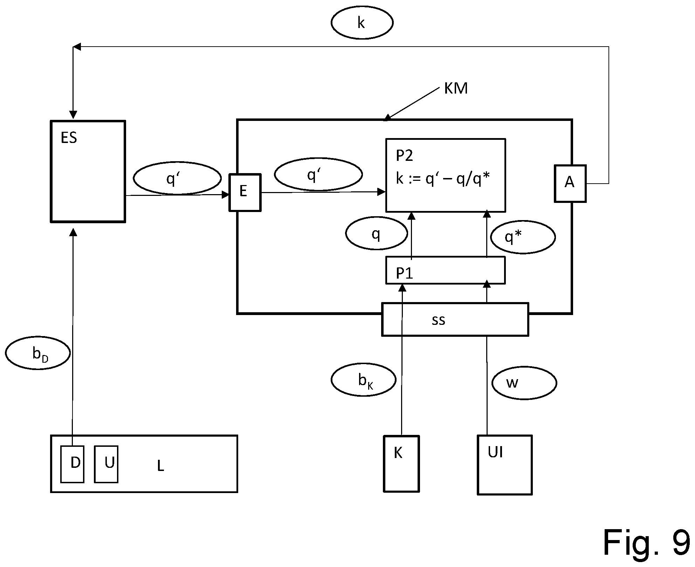

**Fig. 8** zeigt ein Ablaufdiagram gemäß einer bevorzugten Ausführungsform der Erfindung zur Kalibrierung des Echtzeit-Schätzers ES gemäß einer bevorzugten Ausführungsform der Erfindung. Nach dem Start des Verfahrens wird in Schritt S1 das Qualitätsschätzergebnis q' des Echtzeit-Schätzers ES eingelesen, welches während dem Schneiden aus Sensorsignalen des Sensors oder Detektors D eines bestimmten Schnittes, typischerweise aus Videodaten einer In-process-Kamera, berechnet wurde und gespeichert wurde. Dazu wurden Sensorsignale erfasst, aus denen in Schritt S11 mittels eines Schätz-Algorithmus ein Qualitätsschätzergebnis berechnet und gespeichert wird. In Schritt S2 wird ein Qualitätsmessergebnis q bereitgestellt. Dazu wurde in Antwort auf ein Triggersignal, das von dem Kalibrierungsmodul ausgegeben werden kann, in Schritt S21 ein Messsignal, z.B. ein Bild oder eine Bildfolge von der Schnittkante des Werkstücks erfasst (mittels Kamera K), das die Grundlage für die Berechnung des Qualitätsmessergebnisses q liefert. Alternativ kann auch auf die Aufnahme durch die Kamera verzichtet werden, wenn der Anwender manuell seine Eingabe auf der Benutzerschnittstelle 22, wie weiter unten in Zusammenhang mit Fig. 9 geschildert, eingibt. In Schritt S3 können die beiden Instanzen der Qualitätsdatensätze auf Übereinstimmung verglichen werden, nämlich das Qualitätsschätzergebnis q' und das Qualitätsmessergebnis q. Falls Abweichungen vorliegen oder einen bestimmten Toleranzbereich übersteigen, kann in Schritt S4 der Kalibrierungsdatensatz k berechnet und ausgegeben werden, um in Schritt S5 den Echtzeit-Schätzer ES zu kalibrieren bzw. nachzuregeln. Dies kann durch geeignete Einstellparameter für den Schätzalgorithmus ausgeführt werden. Das Verfahren kann intermittierend während des gesamten Schneidprozesses zur Anwendung kommen, wie in Figur 7 gezeigt, mit dem Pfeil, der von Schritt S5 wieder zu Schritt S1 zurück verzweigt. Vorzugsweise sind jedoch im Vorfeld Konfigurationen möglich, um die Dauer und/oder die Häufigkeit der Kalibrationsprozedur zu definieren. Auch das Triggersignal bzw. ein Trigger bzw. kann parametrierbar sein. Es ist auch möglich, dass die Schätzung für einen bestimmten Abschnitt des Schneidprozesses (z.B. ein Werkstück) konstant bleibt (so dass das Schätzergebnis für diesen Abschnitt nur einmal bereitgestellt werden muss), dass aber mehrere Messsignale für z.B. unterschiedliche Qualitätsmessgrössen bereitgestellt werden sollen, dann kann von Schritt S5 auch nach Schritt S2 zurückverzweigt werden.

**Fig. 9** zeigt in einer schematischen Darstellung gemäß einer Ausführungsvariante nochmals eine mögliche Implementierung des Kalibrierungsmoduls KM für den Echtzeit-Schätzer ES, der zur - vorzugsweise fortlaufenden, kontinuierlichen - Qualitätsschätzung online, also während eines Schneidvorganges bzw. in Echtzeit ausgebildet ist. Von dem Sensor D, insbesondere einer in-process Kamera, die z.B. seitlich oder koaxial am oder im Schneidkopf befestigt sein kann, und/oder Fotodioden werden dem Echtzeit-Schätzer ES fortlaufend Signale $b_D$, vorzugsweise optische Signale zugeführt, die mittels eines Schätzalgorithmus' zu einem Qualitätsschätzergebnis q' verarbeitet werden, das - wie der Name sagt - die mutmaßliche Qualität des aktuellen Schneidprozesses abschätzen soll. Da sich aber der Zustand des Lasers verändert (Verschleiß, Alterung etc.) und auch das Werkstück-Material unterschiedlich ist und aufgrund von anderen Einflussfaktoren, wird die Qualität mitunter immer wieder falsch geschätzt, was möglicherweise zu nachteiligen Einstellungen und zu einer tatsächlich schlechteren Qualität führen kann. Dies kann durch die vorliegende Erfindung vermieden werden, indem der Echtzeit-Schätzer ES einer Kalibrierung oder Nach-Justierung unterworfen wird auf Basis von einer real gemessenen Schneidqualität. Dazu ist die Messeinrichtung K vorgesehen, die Bilder $b_K$ von ausgewählten geschnittenen Teilen macht.

Wieviel und welche Teile hier als Grundlage der Aufnahme dienen sollen, kann - z.B. abhängig von Schneidplan - in einer Konfigurationsphase eingestellt und konfiguriert werden. Die Messeinrichtung oder insbesondere die Kamera K kann an der Laserschneidmaschine L, separat von der Laserschneidmaschine oder an einem Folgesystem (Sortierroboter, wie in Fig. 2 dargestellt) angeordnet sein. Die Kamera K kann nach vorkonfigurierbaren Ereignissen angesteuert werden, Aufnahmen $b_K$ zu machen. Dies kann sporadisch erfolgen. Die Kamera K kann auch in einem mobilen Endgerät, wie z.B. ein Smartphone oder ein Tablet oder dergleichen angeordnet sein. In Fig.9 ist die Einleseschnittstelle E des Kalibrierungsmoduls KM gekennzeichnet zum Einlesen des Qualitätsschätzergebnisses q' des Echtzeitzeitschätzer ES. Mit dem Bezugzeichen U ist ein Umlenkspiegel gekennzeichnet, der optional am Laserkopf angeordnet sein kann und zur Online Prozessbeobachtung dient. Dazu kann nach einem Teilschneidvorgang, der eine Schnittkante zumindest teilweise freilegt, einen vorzugsweise an der Düse angeordneten Umlenkspiegel verwenden, um mit Blickrichtung von oben die freigelegte Schnittkante von der Seite zu erfassen. Die Erfassung der Messsignale erfolgt somit in diesem Fall mit einer Messeinrichtung, die an der Laserschneidmaschine, insbesondere am Schneidkopf ausgebildet ist. Im letzteren Fall kann der Detektor D, der während des Schneidens die Prozesszone beobachtet und Sensorsignale erfasst (Sensor) dasselbe Bauteil sein, das später die Schnittkante des geschnittenen Werkstücks erfasst (Messeinrichtung). Vorzugsweise ist der Sensor zur Bildsignalerfassung bestimmt. Die Bildsignalerfassung kann dazu entweder an einem Produktivschnitt oder an einem Kalibrierschnitt erfolgen.

Wie in Fig. 9 gezeigt, ist die Kamera K grundsätzlich unabhängig von dem Sensor D; es sind somit 2 separate optische Erfassungseinrichtungen an unterschiedlichen Bauteilen und/oder Positionen des Systems vorgesehen. In einer Variante der Erfindung, kann die Funktionalität auch in einem Gerät (insbesondere in dem Sensor D) zusammengefasst werden, so dass keine separate Kamera notwendig ist.

Die Kamera K ist dazu ausgelegt, über eine kabelgebundene oder eine Funkverbindung - in Figur 9 mit Schnittstelle ss bezeichnet - die erfassten Bilddaten an einen ersten Prozessor P1 des Kalibrierungsmoduls KM zu übertragen. Der erste Prozessor P1 ist dazu bestimmt, ein Qualitätsmessergebnis q der Schnittkante des fertig geschnittenen Werkstücks bereitzustellen, wobei das Qualitätsmessergebnis q hauptsächlich basierend auf dem Erfassen von Messsignalen der Schnittkante des jeweiligen fertig geschnittenen Werkstücks mittels der Kamera K und optional nachfolgender Bildanalyse durch geeignete Bildverarbeitungsalgorithmen mittels künstlicher neuronaler Netzwerke (ANNs) berechnet wird. Es wird der Begriff ‚Qualitätsmessergebnis' verwendet, da die Qualität direkt oder indirekt "gemessen" wird (indirekt durch die Kamerabilder $b_K$) und die Berechnung auf real erfassten oder gemessenen Werten basiert. Zur Verwendung der ANNs sei auf folgende Publikationen verwiesen: (1) Tatzel L., Leon F.: Image-based roughness estimation of laser cut edges with a convolutional neural network, Lane 2020; (2) Giusti A. et.al.: Image-based Measurement of Material Roughness using Machine Learning Techniques, ISEM 2020; (3) De Mitri O. et.al.: Image acquisition, evaluation and segmentation of thermal cutting edges using a mobile device, SPIE Photonics 2019; (4) Soukup D., Huber-Mörk R. (2014) Convolutional Neural Networks for Steel Surface Defect Detection from Photometric Stereo Images. In: Bebis G. et al. (eds) Advances in Visual Computing. ISVC 2014. Lecture Notes in Computer Science, vol 8887. Springer, Cham.

In einer Weiterentwicklung der Erfindung kann die Berechnung des Qualitätsmessergebnisses zusätzlich oder alternativ zu den erfassten Kamerabilddaten andere Messdaten berücksichtigen, wie zum Beispiel Daten von anderen Messeinrichtungen und/oder Metadaten, die bei den sensorisch erfassten Messdaten miterfasst werden und/oder Maschinendaten, die den Schneidprozess des Lasers charakterisieren, wie zum Beispiel Art des Lasers, Laserleistung, Geschwindigkeit etc. der erste Prozessor P1 ist dazu bestimmt, aus den bereitgestellten Daten und insbesondere aus den Bilddaten der Schnittkante $B_K$, ein Qualitätsmessergebnis q zu berechnen.

Ein zweiter Prozessor P2 des Kalibrierungsmoduls KM ist daraufhin zum Vergleich des eingelesenen Qualitätsschätzergebnisses q', das vom Echtzeit-Schätzer ES bereitgestellt wurde, mit dem tatsächlichen oder realen Qualitätsmessergebnis q, das von dem ersten Prozessor P1 bereitgestellt wurde, bestimmt. Dies ist in Figur 9 mit der Formel:

$$„k := q' - q/q*"$$

gekennzeichnet, um deutlich zu machen, dass sich der Kalibrierungsdatensatz k aus der Abweichung zwischen Schätzung q' und Messung q bzw. manueller Eingabe q* ergibt. Der zweite Prozessor P2 ist dann nach einem vorkonfigurierbaren Ereignismuster dazu bestimmt, einen Kalibrierungsdatensatzes k zur Kalibrierung des Echtzeit-Schätzers ES zu berechnen und das Ergebnis mit dem Kalibrierungsdatensatz k an eine Ausgabeschnittstelle A weiterzureichen, die zur Ausgabe des berechneten Kalibrierungsdatensatzes k bestimmt ist.

In einer ersten Ausführungsform wird das Qualitätsmessergebnis q algorithmisch und automatisch auf dem ersten Prozessor P1 berechnet und zwar auf Basis der erfassten Bilder $b_K$ der Kamera K.

In einer zweiten Ausführungsform kann ein voll oder teil-manuelles Vorgehen ausgeführt werden, indem ein Anwender die Schnittkante des geschnittenen Werkstücks manuell begutachtet und bewertet. Dazu können ihm auf einer Benutzerschnittstelle UI geeignete Eingabefelder zur Verfügung gestellt werden, in die er bestimmte Werte w für ausgewählte und/oder vorkonfigurierte Qualitätsparamater eingeben kann, wie z.B. Rauheit, Gratbildung und weitere. Die eingegebenen Werte w werden dann dem ersten Prozessor P1 zugeführt, der daraufhin eine einfache Routine ausführt und das Qualitätsmessergebnis q* aus den eingegebenen Werten ermittelt. Für diese Routine kann ein Verfahren gewählt werden, wie in WO2020069889 A1 beschrieben. Es kann somit auch eine teil-manuelle Eingabe angewendet werden, bei der primär qualitative Werte wie "gut", "mittel", etc. eingegeben werden können. Sind die Online-Qualitätsschätzungen ebenfalls zu solchen qualitativen Werten zuzuordnen (wie oben vorgeschlagen), so können die Werte aus Online- und Offline-Qualität gut miteinander verglichen bzw. justiert werden.

In einer weiteren Ausführungsform kann auch eine Kombination der beiden vorstehend genannten Alternativen zur Anwendung kommen. Dies hat den Vorteil, dass das automatisch berechnete Qualitätsmessergebnis q einer Verifikation unterzogen werden kann. Dazu wird das automatisch berechnete Qualitätsmessergebnis q mit ermittelten Qualitätsmessergebnis q* verglichen, das auf den manuellen Eingaben des Anwenders basierte. Bei Abweichungen (z.B. über einer Schwelle) wird nochmals eine Überprüfungsroutine angestoßen und der Anwender kann z.B. zur nochmaligen Eingabe aufgefordert werden. Bleibt die Abweichung bestehen, deutet dies auf einen Fehler der Qualitätsmessergebnisberechnung hin und es kann eine Fehlermeldung ausgegeben werden, um z.B. eine Verbesserung der Berechnungsfunktion anzustoßen, die auf dem ersten Prozessor P1 zur Berechnung des Qualitätsmessergebnisses q ausgeführt wird.

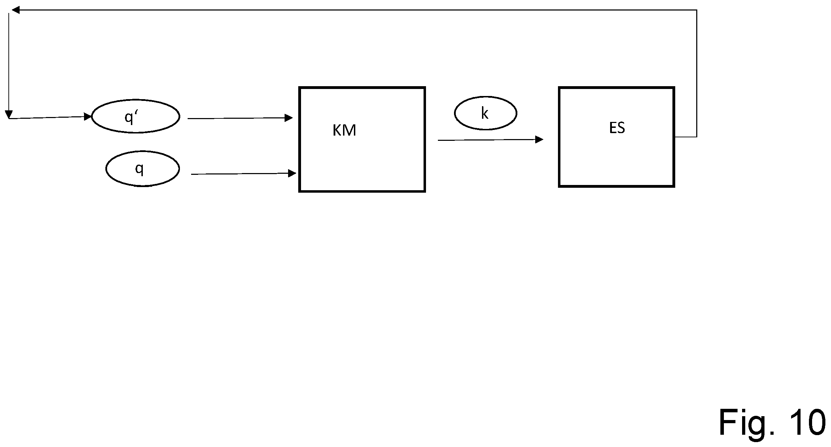

**Fig. 10** zeigt in einer schematischen Darstellung das Kalibrierungsmodul KM im Datenaustausch mit dem Echtzeit-Schätzer ES. Dem Kalibrierungsmodul KM werden auf stark abstrahierte Weise sowohl das Qualitätsmessergebnis q als auch das Qualitätsschätzergebnis q' zugeführt. Auf Basis dieser Datensätze, die natürlich auf dieselbe Schnittkante bezogen sind, kann dann der Kalibrierungsdatensatz k berechnet werden. Der Kalibrierungsdatensatz k wird dann an den Echtzeit-Schätzer ES zur Kalibrierung weitergeleitet.

Es können unterschiedliche Methoden angewendet werden, um die Schneidqualität aus fotografierten Schnittkanten abzuleiten. So könnten z.B. Vergleichsbilder von qualitativ hochwertigen Schnitten hinterlegt werden und diese mit aktuellen Bildern verglichen werden, um die aktuelle Schneidqualität zu beurteilen. Weiter sei auf die Publikation «Soukup D., Huber-Mörk R. (2014) Convolutional Neural Networks for Steel Surface Defect Detection from Photometric Stereo Images. In: Bebis G. et al. (eds) Advances in Visual Computing. ISVC 2014. Lecture Notes in Computer Science, vol 8887. Springer, Cham» verwiesen, die die Möglichkeit der Charakterisierung von metallenen Oberflächen mittels CNN und Bildern aus verschiedenen Blickwinkeln behandelt., siehe dazu https:// pdfs.semanticscholar.org/ b2b8/ab163fb0183325dd3458e3cbaad2f8bf265e.pdf.

Weiter sei zur Schätzung der Rauheit von Laserschnitten mittels Deep Learning auf die Publikation: Tatzel L., Leon F.: Image-based roughness estimation of laser cut edges with a convolutional neural network, Lane 2020 verwiesen.

Die Offline-Qualitätsmessung von ausgewählten Schnittkanten an ausgewählten Teilen zwecks Kalibrierung der Online-Qualitätsschätzung bietet sich insbesondere bei Lasermaschinen an, welche über ein Maschine-Handling System verfügen, bzw. ein solches angebunden haben. Dabei werden die geschnittenen Teile mit Robotern (oder ähnlichem) vom Schneidtisch entnommen/abgeräumt/ab- und/oder umgestapelt. Ganz besonders geeignet sind Systeme, welche bereits beim Abräumen bzw. beim Sortieren eine Kameraanbindung vorgesehen haben. Da ist es für den sortierenden bzw. abräumenden Roboter ein Leichtes der Kamera auch die Schnittkante eines ausgewählten Teils zu präsentieren. Womöglich wäre auch eine separate Kamera dazu vorteilhaft. Ist ein Abbild der Schnittkante vorhanden, kann damit die reale Schneidqualität festgestellt (Rauheit, Grat,...) gemessen und der Maschine zurückgeführt werden. Die Schneidqualität umfasst folgende Merkmale (nicht abschliessend), wobei einige Merkmale auch als Qualitätsdefekte bezeichnet werden: Rauheit, Kolkungen, Gratbildung, Schlackenrückstand, Verschweissung. Die Maschine kann die gemessene Qualität (z.B. via 2. Kamera, sporadisch) der Schnittkante mit der online über den 1. Sensor geschätzten Qualität (z. B. Prozesssignale, wie Prozessleuchten) vergleichen (also kalibrieren) und ggf. insbesondere, aber nicht notwendigerweise, bei einer Abweichung oberhalb einer Schwelle, die geschätzte Qualität neu kalibrieren oder justieren.

Die vorgestellte Lösung ermöglicht ein vollautomatisch arbeitendes Schneidsystem, welches aufgrund der periodischen Überprüfung (Kalibrierung) ein Beibehalten der erforderlichen/gewünschten Schneidqualität ermöglicht.

Auch ohne die oben genannten Handlingsysteme (Roboter) kann die Idee in jede Automationsanlage integriert werden - wenigstens online ein 1. Sensor im/am Schneidkopf zum Monitoring der Prozesssignale und wenigstens ein 2. Sensor bzw. Kamera in einer Lage, die eine Qualitätsermittlung einer Schnittkante ermöglicht.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren, und zwar auch dann, wenn die Kombination nicht explizit genannt ist.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Blechschneidmaschinen angewendet werden kann, sondern auch für andere Laseranlagen, die eine hohe Qualität erfordern. Des Weiteren können die Bauteile des Kalibriermoduls oder des Systems auf mehreren physikalischen Produkten verteilt realisiert werden (verteiltes System) mit geeigneten Datenverbindungen.

**Patentansprüche**

1. Verfahren zur Kalibrierung eines Echtzeit-Schätzers (ES), der zur Qualitätsschätzung für ein Schneidverfahren mit einer Laserschneidmaschine (L) bestimmt ist, mit den folgenden Verfahrensschritten:

   - Einlesen (S1) eines Qualitätsschätzergebnisses (q') des Echtzeit-Schätzers (ES), wobei das Qualitätsschätzergebnis (q') basierend auf zumindest einem Sensorsignal zumindest eines Sensors (D) ermittelt wird;
   - Bereitstellen (S2) eines Qualitätsmessergebnisses (q) der Schnittkante des Werkstücks, wobei das Qualitätsmessergebnis (q) durch Erfassen (S21) von Messsignalen einer Schnittkante eines fertig geschnittenen Werkstücks mittels einer Messeinrichtung (K) bereitgestellt werden kann;
   - Vergleichen (S3) des eingelesenen Qualitätsschätzergebnisses (q') mit dem bereitgestellten Qualitätsmessergebnis (q) und ereignisbasiert:
   - Berechnen (S4) eines Kalibrierungsdatensatzes (k) zur Kalibrierung (S5) des Echtzeit-Schätzers (ES).

2. Verfahren nach Patentanspruch 1, wobei der Echtzeit-Schätzer (ES) zur Ausführung eines Schätzalgorithmus (S22) ausgebildet ist und wobei der Schätzalgorithmus (S22) zumindest aus erfassten Sensorsignalen zumindest eines Sensors (D) das Qualitätsschätzergebnis (q') berechnet.

3. Verfahren nach Patentanspruch 2, wobei der Schätzalgorithmus (S22) des Echtzeit-Schätzers (ES) ein maschinelles Lernverfahren umfasst, und insbesondere ein tiefes Faltungsnetz (CNN).

4. Verfahren nach einem der vorangehenden Patentansprüche wobei der zumindest eine Sensor (D) als optischer Sensor und insbesondere als eine in-process Kamera und/oder als Fotodiodeneinheit ausgebildet ist und/oder wobei die Messeinrichtung (K) eine Kamera, insbesondere eine Kamera in einem mobilen Endgerät und/oder an einem Automatisierungssystem befestigt oder diesem zugeordnet ist, und/oder wobei die Messeinrichtung (K) als optische Messeinrichtung und insbesondere als eine postprocess Kamera ausgebildet ist.

5. Verfahren nach einem der vorangehenden Patentansprüche, bei dem das Erfassen des Sensorsignals und/oder des Messsignals konfigurierbar ist, insbesondere hinsichtlich einer Ausführungszeit und/oder Ausführungsart.

6. Verfahren nach einem der vorangehenden Patentansprüche, bei dem das Berechnen (S4) eines Kalibrierungsdatensatzes (k) nur erfolgt, wenn festgestellte Abweichungen einen vorkonfigurierbaren Schwellenwert überschreiten.

7. Verfahren nach einem der vorangehenden Patentansprüche, bei dem zu den erfassten Sensorsignalen und zu den erfassten Messsignalen ein Positionsidentifikator zugeordnet und/oder gespeichert wird, über den die erfassten Signale eindeutig identifizierbar sind und einander zuordenbar sind, insbesondere für den Schritt des Vergleichens (S3).

8. Verfahren nach einem der vorangehenden Patentansprüche, bei dem den erfassten Sensorsignalen und/oder den erfassten Messsignalen Metadaten zugeordnet und/oder gespeichert werden.

9. Verfahren nach einem der vorangehenden Patentansprüche, bei dem der Kalibrierungsdatensatz (k) einen Offset umfasst, mit dem das Qualitätsschätzergebnis (q') des Echtzeit-Schätzers (ES) beaufschlagt wird.

10. Verfahren nach einem der vorangehenden Patentansprüche, bei dem der Kalibrierungsdatensatz (k) materialspezifisch und/oder schneidprozessspezifisch berechnet wird.

11. Verfahren nach einem der vorangehenden Patentansprüche, bei dem der Kalibrierungsdatensatz (k) die trainierten Parameter eines Kalibrierungsmodells beinhaltet, das mit jeweils einander zugeordneten Qualitätsschätzergebnissen (q') und Qualitätsmessergebnissen (q) trainiert worden ist.

12. Verfahren nach einem der vorangehenden Patentansprüche, wobei das Kalibrierungsmodell ausgewählt oder kombiniert ist aus: Regressionsmodell, Support Vector Machine, Random Forest, Gradient boosted Tree, Künstliches Neuronales Netzwerk und/oder bei dem ein Ensemble-Learning Ansatz mit einer Kombination von unterschiedlichen Modellen angewendet wird.

13. Verfahren nach einem der vorangehenden Patentansprüche 11 oder 12, bei dem das Kalibrierungsmodell trainiert wird, indem zusätzlich gespeicherte Zwischenergebnisse des Echtzeit-Schätzers als Trainingsdaten verwendet werden und insbesondere Zwischenergebnisse des Echtzeit-Schätzers in Form von Aktivierungswerten von Neuronen eines convolutional neural networks (CNN), die vor einer Ausgabeschicht angeordnet sind.

14. Verfahren nach dem unmittelbar vorangehenden Patentanspruch, bei dem das Kalibrierungsmodell trainiert wird, indem gespeicherte Eingangsdaten des Echtzeit-Schätzers und zugeordnete Qualitätsmessergebnisse (q) als Trainingsdaten verwendet werden.

15. Verfahren nach einem der vorangehenden Patentansprüche 11 bis 13, bei dem das Kalibrierungsmodell und/oder der Echtzeit-Schätzer (ES) mittels eines Action-Reward-Learning Algorithmus, insbesondere mittels eines Reinforcement Learning Algorithmus angepasst wird.

16. Verfahren nach einem der vorangehenden Patentansprüche 11 bis 14, bei dem das Kalibrierungsmodell und/oder der Echtzeit-Schätzer (ES) mittels eines Transfer Learning Verfahrens auf neue Materialien angepasst wird.

17. Verfahren nach einem der vorangehenden Patentansprüche, bei dem das Erfassen (S21) von Sensorsignalen einer Schnittkante an einem Kalibrierschnitt oder ohne Kalibrierschnitt ausgeführt wird.

18. Verfahren nach einem der vorangehenden Patentansprüche, bei dem das Erfassen (S21) von Messsignalen mittels des Sensors (D) über einen Umlenkspiegel (U) erfolgt.

19. Verfahren nach einem der vorangehenden Patentansprüche, bei dem das Qualitätsmessergebnis (q) durch einen Eingabedatensatz über eine Benutzerschnittstelle (UI) bereitgestellt wird.

20. Verfahren nach einem der vorangehenden Patentansprüche, bei dem der Echtzeit-Schätzer (ES) und die Schritte des Verfahrens, insbesondere das Einlesen (S1), das Bereitstellen (S2) und das Vergleichen (S3), nach der Ausführung eines Kalibrierschnittes ausgeführt werden.

21. Kalibrierungsmodul (KM) zur Kalibrierung eines Echtzeit-Schätzers (ES), der zur Qualitätsschätzung für ein Schneidverfahren mit einer Laserschneidmaschine (L) bestimmt ist, mit:

- Einer Einleseschnittstelle (E) zum Einlesen eines Qualitätsschätzergebnisses (q') des Echtzeit-Schätzers (ES);
- Einem ersten Prozessor (P1), der zum Bereitstellen eines Qualitätsmessergebnisses (q) der Schnittkante des Werkstücks bestimmt ist, wobei das Qualitätsmessergebnis (q) insbesondere durch Erfassen (S21) von Messsignalen einer Schnittkante eines fertig geschnittenen Werkstücks mittels einer Messeinrichtung (K) bereitgestellt werden kann;

- und wobei ein zweiter Prozessor (P2) zum Vergleich des eingelesenen Qualitätsschätzergebnisses (q') mit dem Qualitätsmessergebnis (q) bestimmt ist und ereignisbasiert: zum Berechnen eines Kalibrierungsdatensatzes (k) zur Kalibrierung des Echtzeit-Schätzers (ES) bestimmt ist

- Einer Ausgabeschnittstelle (A), die zur Ausgabe des berechneten Kalibrierungsdatensatzes (k) bestimmt ist.

22. System mit einem Echtzeit-Schätzer (ES) und einem Kalibrierungsmodul (KM) gemäß dem unmittelbar vorangehenden Patentanspruch zur Anwendung für eine Laserschneidmaschine (L).

23. System nach dem unmittelbar vorangehenden Patentanspruch, wobei das System einen Sensor (D) umfasst oder mit diesem in Datenaustausch steht.

24. Computerprogramm, wobei das Computerprogramm in eine Speichereinheit einer Recheneinheit ladbar ist und Programmcodeabschnitte enthält, um die Recheneinheit zu veranlassen, das Verfahren zur Kalibrierung gemäß einem der vorangehenden Verfahrensansprüche auszuführen, wenn das Computerprogramm in der Recheneinheit ausgeführt wird.

FIG. 1

Fig. 2

Fig. 3

Fig. 4

Fig. 5

**Monitoring Teilequalität (offline)**

Sensorik 2 (Messeinrichtung K): Kamera, optisches Oberflächenmessgerät, ...

Erfassung Daten Schnittkante: Kamerabild, Messwerte

Qualitätsmessung

Qualitätsmessergebnis q

---

Laserschneidmaschine (L), Werkstück, Schneidplan, Steuerung

geschnittene Teile

Schneidprozess: Schneiden Teilekanten

**Kalibrierungsmodul KM**

Ermittlung geeignete Schnittkante(n) zur Kalibrierung

Auslösen Messung

Einlesen Messung

Trigger-Einheit

Einlesen Schätzung

Vergleich Schätzung zu Messung

Berechnung Kalibrierungsdatensatz k

Kalibrierungsdatensatz k

---

**Monitoring Schneidprozess (online)**

Sensorik 1 (Detektor D): Kamera, Fotodiode, ...

Erfassung Daten Schneidprozess: Kamerastream, Fotodiodensignale, Prozessparameter, Kinematik

Echtzeit-Schätzer (ES)

Qualitätsschätzergebnis (q')

**Kalibriertes Monitoring Schneidprozess (online)**

Evaluierung Kalibrierungsmodell

kalibriertes Qualitätsschätzergebnis q''

---

Fig. 6

EP 4 119 284 A1

Fig. 7

```
                        ┌─────────────────────────┐
                        │    Start Kalibrierung    │
                        │   Echtzeit-Schätzer ES   │
                        └─────────────────────────┘
                                     │
┌──────────────────────────┐  ┌─────────────────────────┐
│ S11: Berechnung +        │  │    S1: Einlesen         │
│ Speicherung              │─▶│ Qualitätsschätzergebnis │◀──┐
│ Qualitätsschätzergebnis q'│  │          q'             │   │
│ von Teilekante           │  └─────────────────────────┘   │
└──────────────────────────┘             │                  │
                                          ▼                  │
┌──────────────────────────┐  ┌─────────────────────────┐   │
│ S21: Berechnung +        │  │   S2: Bereitstellung    │   │
│ Speicherung              │─▶│  Qualitätsmessergebnis q│◀──┤
│ Qualitätsmessergebnis q  │  └─────────────────────────┘   │
│ von Teilekante           │             │                  │
└──────────────────────────┘             ▼                  │
                              ┌─────────────────────────┐   │
                              │  S3: Vergleich q' mit q │   │
                              └─────────────────────────┘   │
                                          │                 │
                                          ▼                 │
                                    ◇ Abweichung? ◇─────────┘
                                          │ ja
                                          ▼
                              ┌─────────────────────────┐
                              │   S4: Berechnung        │
                              │ Kalibrierungsdatensatz k │
                              └─────────────────────────┘
                                          │
                                          ▼
                              ┌─────────────────────────┐
                              │ S5: Kalibrierung Echtzeit-│
                              │      Schätzer ES         │
                              └─────────────────────────┘
                                          │
                                          ▼
                              ┌─────────────────────────┐
                              │     Ende Kalibrierung    │
                              └─────────────────────────┘
```

Fig. 8

Fig. 9

Fig. 10

Europäisches Patentamt
European Patent Office
Office européen des brevets

## EUROPÄISCHER RECHERCHENBERICHT

**Nummer der Anmeldung**

**EP 21 18 4974**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 10 675 709 B2 (BYSTRONIC LASER AG [CH]) 9. Juni 2020 (2020-06-09) | 1-6,8-24 | INV. B23K26/38 |
| A | * Sp. 3,4, 10-13; Abbildungen 1,6 * | 7 | B23K31/00 B23K31/12 B23K26/03 |

-----

**RECHERCHIERTE SACHGEBIETE (IPC)**

**B23K**

Der vorliegende Recherchenbericht wurde für alle Patentansprüche erstellt

| Recherchenort | Abschlußdatum der Recherche | Prüfer |
|---|---|---|
| **München** | **17. Januar 2022** | **Hernanz, Sonsoles** |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
   Dokument

EPO FORM 1503 03.82 (P04C03)

# EP 4 119 284 A1

## ANHANG ZUM EUROPÄISCHEN RECHERCHENBERICHT
## ÜBER DIE EUROPÄISCHE PATENTANMELDUNG NR.

EP 21 18 4974

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2022

| Im Recherchenbericht angeführtes Patentdokument | Datum der Veröffentlichung | Mitglied(er) der Patentfamilie | Datum der Veröffentlichung |
|---|---|---|---|
| US 10675709 B2 | 09-06-2020 | EP 3159093 A1 | 26-04-2017 |
| | | EP 3412399 A1 | 12-12-2018 |
| | | PL 3159093 T3 | 31-12-2018 |
| | | PL 3412399 T3 | 25-10-2021 |
| | | US 2017113300 A1 | 27-04-2017 |
| | | US 2020254559 A1 | 13-08-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019209088 A1, Handy-Fotos
- US 9529343 B2
- WO 2020127004 A1
- WO 2020069889 A1
- WO 2021073946 A1
- EP 3159093 B1
- EP 2357057 A1
- EP 20165589 A

**In der Beschreibung aufgeführte Nicht-Patentliteratur**

- **SANTOLINI, G.** Cut Quality Estimation in Industrial Laser Cutting Machines: A Machine Learning Approach. *CVPR,* 2019
- **TATZEL L. ; LEON F.** Image-based roughness estimation of laser cut edges with a convolutional neural network. *Lane,* 2020
- **GIUSTI A.** Image-based Measurement of Material Roughness using Machine Learning Techniques. *ISEM,* 2020
- **DE MITRI O.** Image acquisition, evaluation and segmentation of thermal cutting edges using a mobile device. *SPIE Photonics,* 2019
- Convolutional Neural Networks for Steel Surface Defect Detection from Photometric Stereo Images. **SOUKUP D. ; HUBER-MÖRK R. et al.** Advances in Visual Computing. ISVC 2014. Lecture Notes in Computer Science. Springer, 2014, vol. 8887